# EUROPEAN PATENT APPLICATION

(11) **EP 4 750 074 A2**
(43) Date of publication of application: **27.05.2026**
(21) Application number: 24856571.5
(22) Date of filing: 22.03.2024
(51) Int. Cl.: H04N 23/951, H04N 23/54, H04N 23/57, H04N 23/62, H04N 23/88, H04N 23/63, H04N 5/77, G06T 3/40, G06T 3/60

(54) **ELECTRONIC DEVICE FOR OBTAINING MULTI-EXPOSURE IMAGE AND METHOD FOR OPERATING SAME**

(30) Priority: 18.08.2023 KR 20230108419; 13.10.2023 KR 20230137065
(71) Applicant: Samsung Electronics Co., Ltd., Suwon-si, Gyeonggi-do 16677 (KR)
(72) Inventor: LEE, Sihyoung, Suwon-si Gyeonggi-do 16677 (KR); HUR, Youngjin, Suwon-si Gyeonggi-do 16677 (KR)
(74) Representative: Gulde & Partner
(86) International application number: PCT/KR2024/003632
(87) International publication number: WO 2025/041951

(57) **Abstract**

An electronic device according to one embodiment comprises: a camera module including an image sensor; a memory in which images are stored; and at least one processor connected to the camera module and the memory. The at least one processor may be configured to perform an operation of acquiring a first image on the basis of image data outputted from the image sensor, and operation of acquiring a second image stored in the memory, an operation of generating a third image on the basis of the second image on the basis of an aspect ratio of the second image, and an operation of generating a fourth image by synthesizing the first image and the third image.

## Description

### [Technical Field]

Various embodiments of the disclosure relate to an electronic device for obtaining a multi-exposure image and a method of operating same.

### [Background Art]

When a film is exposed multiple times to take a photo, a multi-exposure photo in which multiple images overlap may be obtained. In the case of an electronic device including a digital camera, multiple images may be obtained through an image sensor, and the multiple images may be synthesized to acquire a multi-exposure image. The multi-exposure image may be generated based on a synthesis mode configured by the user and the number of images used for synthesis. The electronic device may store an image file including the obtained multi-exposure image in a storage medium.

In a process of generating a multi-exposure image, whether to use pre-stored images in the synthesis may be determined by the user. When the stored images are not used for the synthesis, settings (e.g., ISO, white balance, exposure time, etc.) regarding capture is configured and the capture is performed. The image obtained from the image sensor as capture proceeds may be delivered in the synthesis process and used for the process of generating the multi-exposure image.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

According to an aspect of the disclosure, various embodiments of the disclosure provide an electronic device for acquiring a multi-exposure image and a method of operating the same.

### [Solution to Problem]

An electronic device according to an embodiment may include a camera module including an image sensor, a memory configured to store images, and a processor connected to the camera module and the memory. At least one processor may be configured to perform an operation of obtaining a first image, based on image data output from the image sensor. At least one processor may be configured to perform an operation of obtaining a second image stored in the memory. At least one processor may be configured to perform an operation of generating a third image for which multi-exposure synthesize with the first image is possible based on the second image, according to an aspect ratio of the second image. At least one processor may be configured to perform an operation of generating a fourth image having the second aspect ratio by synthesizing the first image and the third image.

A method of operating an electronic device including a camera module having an image sensor according to an embodiment may include obtaining a first image, based on image data output from the image sensor. The method may include obtaining a second image stored in a memory included in the electronic device. The method may include generating a third image for which multi-exposure synthesize with the first image is possible based on the second image. The method may include generating a fourth image having the second aspect ratio by synthesizing the first image and the third image.

A computer-readable recording medium recording a program according to an embodiment may perform an operation of obtaining, when executed, a first image, based on image data output from the image sensor by an electronic device. In addition, the recording medium may perform an operation of obtaining a second image stored in a memory by the electronic device when the program is executed. The recording medium may perform an operation of causing the electronic device to generate a third image for which multi-exposure synthesis with the first image is possible based on the second image, according to an aspect ratio of the second image when the program is executed. The recording medium may perform an operation of causing the electronic device to generate a fourth image having the second aspect ratio by synthesizing the first image and the third image when the program is executed.

### [Advantageous Effects of Invention]

According to an embodiment of the disclosure, it is possible to obtain a multi-exposure image by using a captured image or a stored image.

In addition, according to an embodiment of the disclosure, the operation for obtaining a multi-exposure image may be intuitive and simplified, thereby enhancing user convenience.

Furthermore, according to an embodiment of the disclosure, the synthesis may also be applied to a pre-stored image having a format different from that of a synthesized image, thereby increasing the versatility of the multi-exposure image.

Advantageous effects according to embodiments of the disclosure are not limited to the foregoing, and various effects may be derived from the contents described below.

### [Brief Description of Drawings]

FIG. 1 is a block diagram of an electronic device in a network environment according to an embodiment.
FIG. 2 is a block diagram illustrating a camera module according to an embodiment.
FIG. 3 is a block diagram of an electronic device according to an embodiment.
FIG. 4 is a block diagram illustrating an example in which the electronic device obtains a base image and a processed image from image sensor data according to an embodiment.
FIG. 5 is a block diagram illustrating elements included in an image file stored by the electronic device according to an embodiment.
FIG. 6 illustrates a method of obtaining a multi-exposure image according to an embodiment.
FIG. 7 is a block diagram of the electronic device performing a method of obtaining a multi-exposure image according to an embodiment.
FIG. 8 is a block diagram of the electronic device performing a method of obtaining a multi-exposure image according to an embodiment.
FIG. 9 is a block diagram of the electronic device performing a method of obtaining a multi-exposure image according to an embodiment.
FIG. 10 is a block diagram of the electronic device performing a method of obtaining a multi-exposure image according to an embodiment.
FIG. 11 illustrates a method of modifying an image to obtain a multi-exposure image according to an embodiment.
FIG. 12 illustrates an operation of cropping an image according to an embodiment.
FIG. 13 illustrates an operation of adjusting an image size and an operation of adjusting an image position according to an embodiment.
FIG. 14 illustrates an example of area division of a multi-exposure image according to an embodiment.
FIG. 15 is a flowchart illustrating a process of determining a value of a pixel corresponding to x and y coordinates of a synthesized image according to an embodiment.
FIG. 16 illustrates an example of area-based image synthesis according to an embodiment.
FIG. 17 illustrates an example of area-based image synthesis according to an embodiment.
FIG. 18A illustrates a UX/UI of a multi-exposure synthesis mode screen displayed on a display of the electronic device according to an embodiment.
FIG. 18B illustrates a UX/UI of a multi-exposure synthesis mode screen displayed on a display of the electronic device according to an embodiment.
FIG. 18C illustrates a UX/UI of a multi-exposure synthesis mode screen displayed on a display of the electronic device according to an embodiment.
FIG. 18D illustrates a multi-exposure synthesis mode screen displayed on a display of the electronic device according to an embodiment.
FIG. 19 is a flowchart illustrating a method of obtaining a multi-exposure image according to an embodiment.

### [Mode for the Invention]

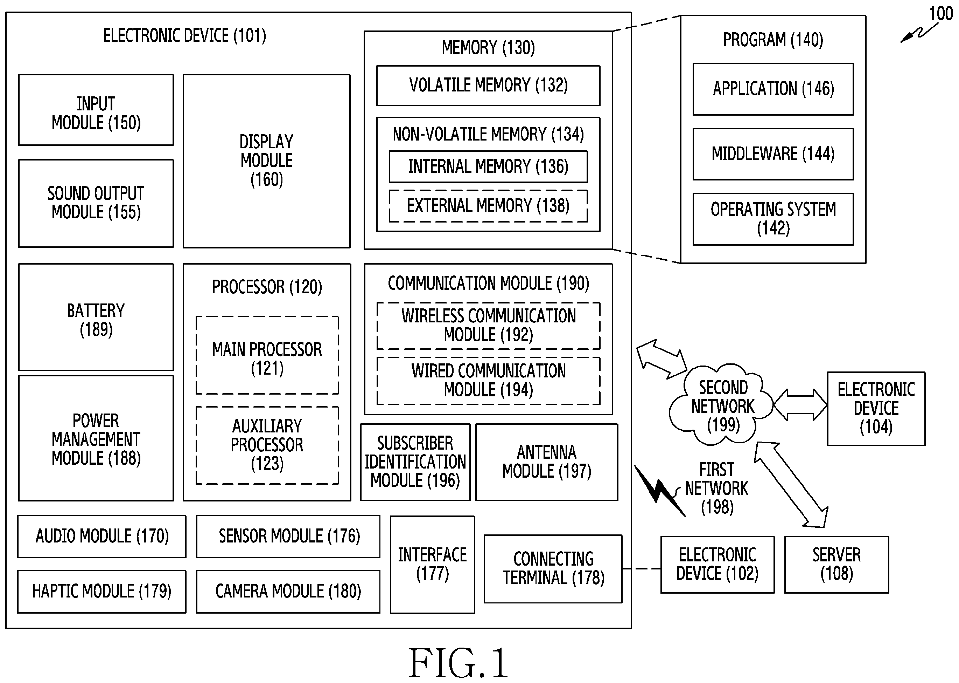

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be incorporated into a single component (e.g., the display module 160).

The processor 120 may, for example, execute software (e.g., a program 140) to control at least one other component (e.g., a hardware or software component) of the electronic device 101, coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may, for example, control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial model may be generated through machine learning. Such learning may be performed, for example, by the electronic device 101 where the artificial intelligence model is performed or via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) coupled directly or wirelessly with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth TM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be incorporated into a single component (e.g., a single chip), or may be implemented as multi components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support high-speed transmission of high-capacity data (enhanced mobile broadband (eMBB)), terminal power minimization and multi-terminal access (massive machine type communications (mMTC)), or ultra-reliable and low-latency communications (URLLC). The wireless communication module 192 may support a high-frequency band (e.g., the mmWave band) to achieve, for example, a high data transfer rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiating element including a conductive material or a conductive pattern formed on a substrate (e.g., a PCB). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed at a first surface (e.g., the lower surface) of the printed circuit board or adjacent thereto and capable of supporting specified high-frequency bands (e.g., mmWave bands), and a plurality of antennas (e.g., an array antenna) disposed at a second surface (e.g., the upper or side surface) of the printed circuit board or adjacent thereto and capable of transmitting or receiving signals in the specified high-frequency bands.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To this end, a cloud computing, distributed computing, mobile edge computing (MEC), or client-server computing technology may be used, for example. The electronic device 101 may, for example, provide an ultra-low-latency service using distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

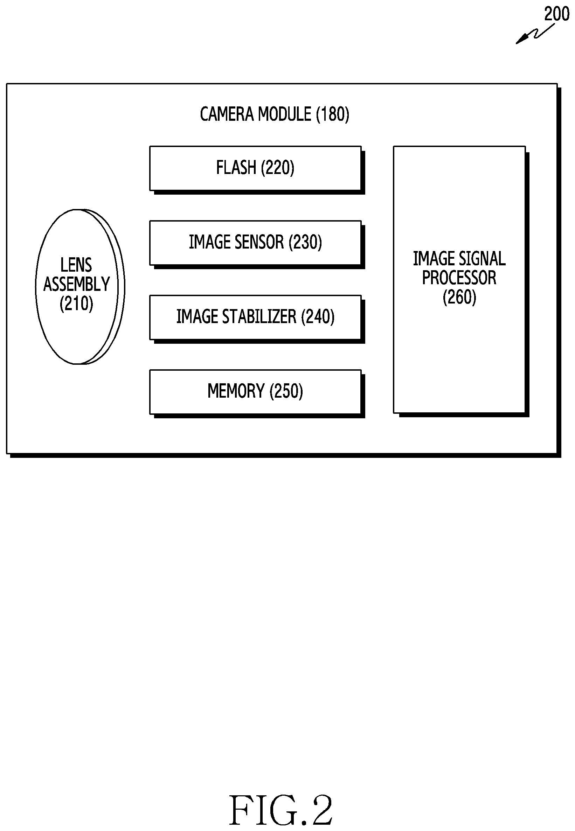

FIG. 2 is a block diagram 200 illustrating the camera module 180 according to an embodiment. Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 260 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

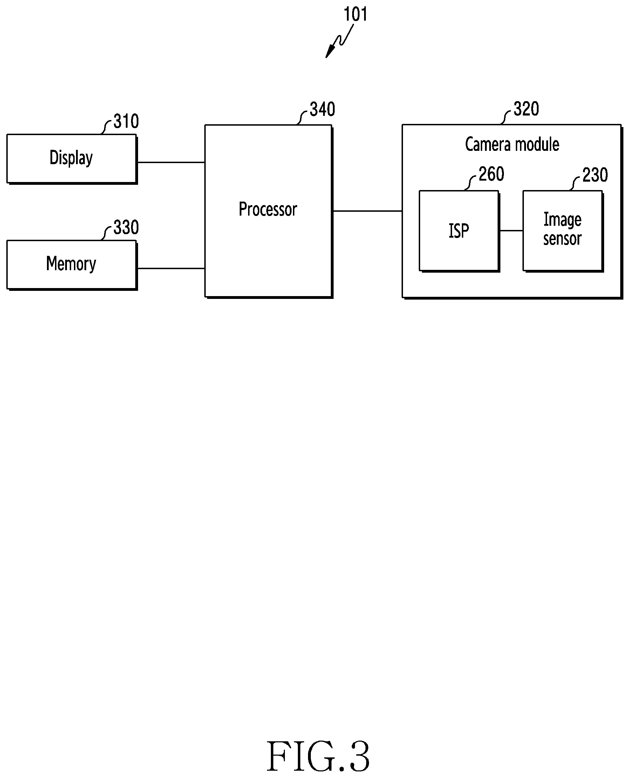

FIG. 3 is a block diagram of the electronic device 101 according to an embodiment.

An electronic device 101 according to an embodiment may include a display 310 (e.g., the display module 160 of FIG. 1), a camera module 320 (e.g., the camera module 180 of FIG. 2), a memory 330 (e.g., the memory 130 of FIG. 1 or the memory 250 of FIG. 2), and at least one processor 340 (e.g., the processor 120 of FIG. 1). The camera module 320 according to an embodiment may include an image sensor 230 and an image signal processor (ISP) 260. FIG. 3 describes an embodiment, and some components illustrated in FIG. 3 may be replaced with other components or omitted.

When the pre-stored image file is used for multi-exposure synthesis, a list of the stored image files may be displayed through a display, and one of the image files may be selected by the user. The selected image file may be used to generate a multi-exposure image, and the generated multi-exposure image may be stored according to whether a multi-exposure end condition is satisfied. In addition, the above processes may be repeatedly performed according to whether a multi-exposure mode ends.

In a process in which the electronic device provides the list of the stored image files, when a format does not match a format of an image currently used for multi-exposure synthesis, the corresponding images may be filtered and processed not to be selected by the user. The image format for the multi-exposure synthesis may be variously defined. For example, a sensor type, a resolution, a color space, bits used per pixel, and information on a used lens may be applied. The electronic device may use only some of the pre-stored images in the multi-exposure synthesis by filtering images in a format for which the multi-exposure synthesis is difficult to be performed. Therefore, in the case of images obtained in various environments

(cloud, other cameras, and sensors), there may occur a problem in that it is difficult to utilize the same for the generation of multiple-exposure images. For example, when the resolution of a capture environment is 4000x3000, if only the images having a resolution of 4000x3000 can be synthesized, the number of files that can be used for multi-exposure synthesis among the stored image files may significantly decrease.

Embodiments of the disclosure propose a method and an apparatus capable of effectively generating a multi-exposure image with respect to the above-mentioned problems.

In an embodiment, at least one processor 340 may execute a camera application for photographing an image. At least one processor 340 may execute a multi-capture mode of synthesizing the captured image with another image, based on the camera application, and providing the synthesized image. For example, at least one processor 340 may execute the multi-capture mode in response to a user input of selecting a multi-capture mode menu included in a user interface provided by the camera application.

In an embodiment, at least one processor 340 may obtain a base image and a processed image. In the document, a "base image (e.g., a raw image)" may refer to image data before image processing for representing brightness and colors perceived by the human eye through image processing is performed. For example, the base image may include image data obtained during a preprocessing process performed by the image signal processor 260 for image sensor data output from the image sensor 230 and a demosaic process or as a result of the process. The base image may be configured in a raw image file format. For example, the base image may be configured according to a raw image in a digital negative (DNG) format defined by Adobe^{™}. A "processed image (e.g., processed image)" may refer to image data generated through image processing on the base image to represent brightness and colors that are perceivable by the human eye, and may be configured in a processed image format (e.g., JPG, PNG, etc.).

It may be difficult to identify the brightness and colors that are the same as or similar to those perceived by the human eye, only from the information included in the base image. Accordingly, the electronic device 101 may render the base image by performing additional calculations using the base image and metadata (e.g., raw image metadata) on the base image. For example, the electronic device 101 may perform demosaic or white balancing for the base image, based on the metadata.

In an embodiment, the image signal processor 260 may generate metadata including image sensor data transferred from the image sensor 230 or information obtained in the process of processing the image sensor data. For example, the metadata may include a white balance parameter value corresponding to a color temperature for performing white balancing for the basic image obtained based on image sensor data. For example, when first image sensor data is for the image captured in the vicinity of a red light source, the image signal processor 260 may obtain first metadata including a value for performing white balancing, based on a color temperature related to a red light source for a first base image obtained based on the first image sensor data.

In an embodiment, the method of obtaining the base image may be variously implemented. For example, at least one processor 340 may receive a user input for selecting a capture button of a user interface displayed through the display 310 while the multi-exposure capture mode is being executed. Based on the received user input, the image signal processor 260 may generate the first base image and the first metadata from the first image sensor data output from the image sensor 230. In another example, at least one processor 340 may display, through the display 310, a list of images including the first base image stored in the memory 330. The stored first base image may be stored in the memory 330 in the form of a raw image file format. The image file stored in the raw image file format may include the base image and metadata. At least one processor 340 may obtain the first base image and the first metadata from the memory 330, based on the user input for selecting the first base image displayed through the display 310. However, this is not limited thereto. The first base image may be generated based on first image sensor data output from the image sensor 230 included in the electronic device 101, or may be generated based on image sensor data output from an image sensor (not shown) included in an external electronic device (not shown). In another example, at least one processor 340 may display, through the display 310, a list of images including a processed image stored in the memory 330. At least one processor 340 may obtain the first base image, based on a user input for selecting the stored processed image displayed through the display 310.

In an embodiment, at least one processor 340 may display, through the display 310, an image including the selected first base image and a user interface for modifying the same, and may obtain information input by the user to modify the image displayed on the display 310. In addition, the processor 340 may synthesize the first base image with another image, based on the image modification information.

In an embodiment, at least one processor 340 may obtain a second base image and second metadata corresponding to the second base image. The second basic image and the second metadata may be obtained based on second image sensor data output from the image sensor 230 at a time point different from the time point at which the first image sensor data is output from the image sensor 230.

In an embodiment, the at least one processor 340 may acquire reference metadata, based on at least a part of the first metadata or the second metadata. For example, at least one processor 340 may determine, as a reference image, the first-obtained base image among the base images (e.g., the first base image and the second base image) to be synthesized. At least one processor 340 may determine the metadata corresponding to the reference image as reference metadata. In another example, at least one processor 340 may determine, as reference metadata, metadata corresponding to any of the base images (e.g., the first base image and the second base image) to be synthesized. In another example, at least one processor 340 may determine reference metadata including a value (e.g., an average value) obtained by calculating a parameter included in the first metadata and a parameter included in the second metadata.

In an embodiment, at least one processor 340 may synthesize the first base image and the second base image, based on a parameter corresponding to the reference metadata. At least one processor 340 may synthesize the first base image and the second base image to obtain a third base image. When no more image is synthesized with the third base image, at least one processor 340 may store an image file generated based on the third base image and the reference metadata. For example, the image file generated based on the third base image and the reference metadata may be stored in the memory 330. In an embodiment, at least one processor 340 may display a screen including a preview image through the display 310. The preview image may be a display in which a video streaming from the image sensor 230 is overlaid on a recently obtained image (a single image or a synthesized image). For example, when the multi-exposure capture mode is being executed in a state in which the first base image has been obtained through the display 310, at least one processor 340 may overlay an image in which an image frame obtained through the image sensor 230 is continuously updated on the image corresponding to the first base image, and output the overlaid image. When the multi-exposure capture mode is being executed after the first and second base images are obtained and the third base image is synthesized, at least one processor 340 may overlay an image in which an image frame obtained through the image sensor 230 is continuously updated on the image corresponding to the third base image, and output the overlaid image.

In an embodiment, at least one processor 340 may further obtain a processed image used to provide a preview image. The processed image may refer to an image obtained through image processing on the base image by the image signal processor 260 or at least one processor 340. For example, the processed image may include image data obtained through tone mapping, noise removal, color correction, or gamma correction on the base image. The processed image may be configured in a format (e.g., a joint photographic experts group (JPG) format) including information having the same or similar luminance and color as those perceived by the human eye. The processed image may have lower bit depth than the base image. At least one processor 340 may synthesize multiple processed images. For example, at least one processor 340 may generate a third processed image corresponding to the third base image obtained by synthesizing the first base image and the second base image, by synthesizing the first processed image corresponding to the first base image and the second processed image corresponding to the second base image. At least one processor 340 may configure the image file to include the finally obtained processed image when the image file is generated. The processed image included in the image file may be used as a thumbnail image or a cover image for the image file.

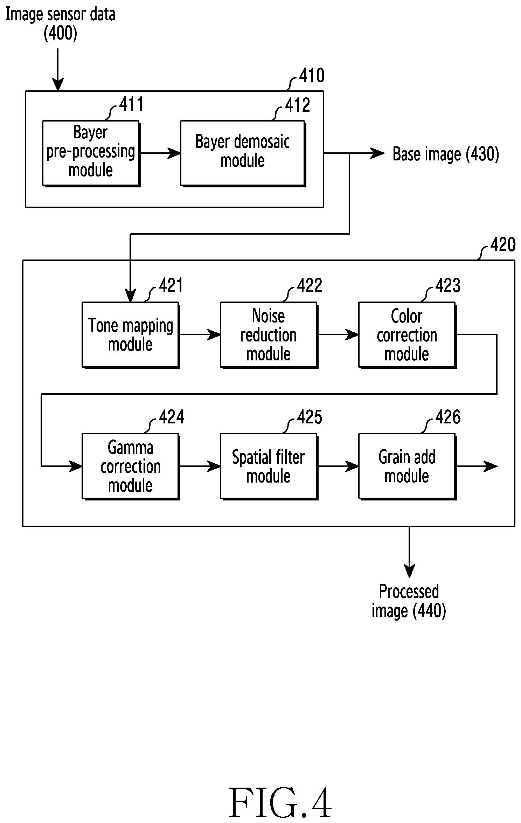

FIG. 4 is a block diagram illustrating an example in which an electronic device (e.g., the electronic device 101 of FIG. 1 or FIG. 3) according to an embodiment obtains a base image and a processed image from image sensor data.

In an embodiment, an image signal processor (e.g., the image signal processor 260 of FIG. 2) of an electronic device (e.g., the electronic device 101 of FIG. 1 or FIG. 3) may process image sensor data 400 through a Bayer/raw processing engine 410 and an image processing engine 420.

The Bayer/raw processing engine 410 may include a Bayer preprocessing module 411 and a Bayer demosaic module 412. The image sensor data 400 may be primarily processed by the Bayer preprocessing module 411. The Bayer demosaic module 412 may convert the data (Bayer image sensor data) primarily processed by the Bayer preprocessing module 411 into an RGB form. A base image 430 may be obtained from the processing process or the processing result of the Bayer/raw processing engine 410. Metadata may be obtained based on the image sensor data 400 or information on the base image 430 obtained through a process of processing the image sensor data 400.

In an embodiment, the result of the image sensor data 400 processed by the Bayer/raw processing engine 410 may be transferred to the image processing engine 420. The image processing engine 420 may include at least one of, for example, a tone mapping module 421, a noise reduction module 422, a color correction module 423, a gamma correction module 424, a spatial filter module 425, and a grain add module 426. A processed image 440 having the same or similar brightness and color as those perceived by the eye may be obtained as a result of the image processing performed by the image processing engine 420.

The configurations of the Bayer/raw processing engine 410 and the image processing engine 420 illustrated in FIG. 4 are for describing an example, and are not limited thereto.

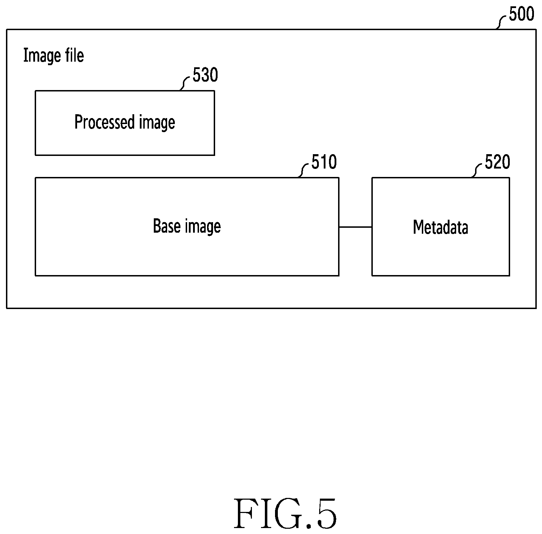

FIG. 5 is a block diagram illustrating elements included in an image file 500 stored by an electronic device (e.g., the electronic device 101 of FIG. 1 or FIG. 3) according to an embodiment.

In an embodiment, the image file 500 (e.g., a raw image file) may include a base image 510 and metadata 520. The image file 500 may further include a processed image 530 corresponding to the base image 510. The processed image 530 may also be omitted.

The metadata 520 may include information that may be used to render the image included in the image file. The metadata may include information obtained from image sensor data output from the image sensor or information obtained in a process of processing the image sensor data. It is difficult to identify brightness and color visible to the human eye only by the image data of the image file stored in a raw format. Therefore, the electronic device may perform additional calculations (e.g., demosaic or white balance), based on the metadata.

The image file may be configured in, for example, a digital negative (DNG) format defined by Adobe^{™}. In this case, the base image 510 may be a raw image (NewSubFileType value is 0) defined by DNG. The metadata 520 may be data providing information on the raw image defined by DNG. The processed image 530 may be a rendered preview (NewSubFileType value is 1) defined by DNG. The processed image 530 may be provided in the form of a thumbnail image for easily searching for an image stored in the image file 500. Alternatively, when there is no software for identifying the base image 510, the processed image may be provided in the form of a cover image. The electronic device (e.g., the electronic device 101 of FIG. 1 or FIG. 3) may render the base image 510 by using the base image 510 and the metadata 520 within the image file 500 by executing dedicated software.

A multi-exposure image may be obtained through synthesize of images obtained using the image sensor at different time points. Since the images used to obtain the multi-exposure image may be generated at different time points, metadata corresponding to respective images may be different. For example, when the color temperature of a light source around an image captured at a first time point is different from the color temperature of a light source around an image captured at a second time point, parameters related to different white balancing may be required. However, since only a parameter corresponding to one condition is stored in the metadata, a result of applying white balancing to the synthesized image may be different from the color of the required image.

In order to obtain multiple exposure images, the images may be obtained from the images pre-stored in the memory. For example, the base image or the processed image included in the image file stored in the memory may be used to obtain the multi-exposure image. However, when a format required to obtain the multi-exposure image does not match a format of the image, the corresponding image may be filtered before being displayed to the user, and may not be selected by the user. When such filtering is performed, the number of images which may be used to obtain the multi-exposure image may decrease.

The technical subjects pursued in the disclosure are not limited to the above mentioned technical subjects, and other technical subjects which are not mentioned may be clearly understood through the following descriptions by those skilled in the art of the disclosure.

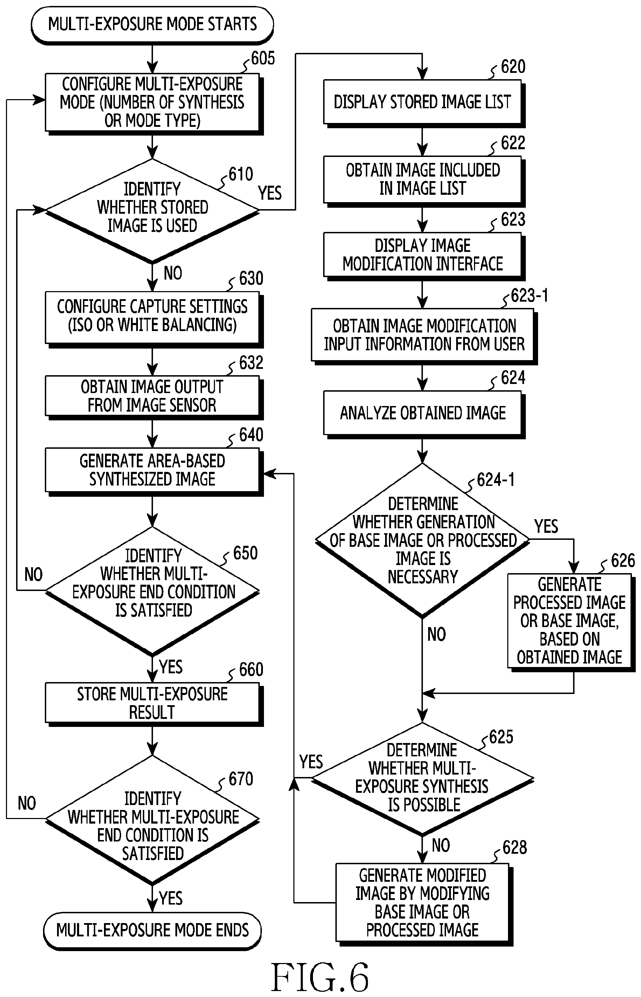

FIG. 6 illustrates a method by which an electronic device (e.g., the electronic device 101 of FIG. 1 or FIG. 3) obtains a multi-exposure image according to an embodiment. In various embodiments of the disclosure, an operation of an electronic device (e.g., the electronic device 101 of FIG. 1 or FIG. 3) may be understood as being performed by at least one processor (e.g., the processor 120 of FIG. 1, the image signal processor 260 of FIG. 2, or the at least one processor 340 of FIG. 3) of the electronic device (e.g., the electronic device 101 of FIG. 1 or FIG. 3) performing a calculation or controlling another component of the electronic device (e.g., the electronic device 101 of FIG. 1 or FIG. 3).

In an embodiment, the electronic device (e.g., the electronic device 101 of FIG. 1 or FIG. 3) may determine a multi-exposure mode configuration value for entering a multi-exposure mode and performing multi-exposure mode capture in operation 605. For example, the electronic device (e.g., the electronic device 101 of FIG. 1 or FIG. 3) may receive at least one user input for selecting the number of images to be used to generate a synthesized image or for selecting a synthesis mode that defines a method of synthesizing images. The electronic device (e.g., the electronic device 101 of FIG. 1 or FIG. 3) may determine a capture configuration value for capturing an image, based on the configured multi-exposure mode configuration value. For example, the capture configuration value may include at least one of sensitivity, white balance, or exposure time. The capture configuration value may be changed based on a user input for each capture during execution of the multi-exposure mode. Alternatively, the capture configuration value may be automatically configured by the electronic device (e.g., the electronic device 101 of FIG. 1 or FIG. 3).

In an embodiment, the electronic device (e.g., the electronic device 101 of FIG. 1 or FIG. 3) may obtain a first base image and may obtain first metadata corresponding to the first base image. In addition, the electronic device may obtain a first processed image, based on the first base image. In operation 610, the electronic device according to an embodiment may determine whether to use an image stored in the memory in order to obtain a multi-exposure image. For example, the electronic device may receive an input regarding whether to use a captured image or a pre-stored image to obtain the multi-exposure image.

When a user selection input for using a captured image is received in operation 610, the electronic device may configure setting values (e.g., ISO, white balance, etc.) for capture in operation 630. In addition, in operation 632, the electronic device may perform capturing and obtaining a base image and a processed image from image sensor data output from the image sensor. In operation 640, the electronic device may perform synthesis, based on the obtained images (the base image and the processed image), to obtain a multi-exposure image (or a synthesized image). For example, the electronic device may synthesize the base image obtained by capture and the processed image with another base image and another processed image acquired previously, respectively, to obtain a synthesized base image and a synthesized processed image.

Meanwhile, when the user selection input for using an image pre-stored in the memory is received in operation 610, the electronic device may display a list of stored images on the display in operation 620, receive an image selection input from the user to obtain the image in operation 622, display the obtained image and an interface capable of modifying the image on the display in operation 623, and obtain information input by the user to modify the image in operation 623-1. In addition, the electronic device may analyze the obtained image, based on the obtained image and/or the obtained user's image modification information in operation 624. The electronic device may determine the necessity of generation of the base image or the processed image according to the analysis result in operation 624-1, and, when necessary, generate the base image or the processed image from the obtained image in operation 626. The electronic device may determine whether or not multi-exposure synthesis is possible for the obtained image or the image generated in operation 626 in operation 625. In operation 625, when it is determined that multi-exposure synthesis is possible, the electronic device may perform synthesis, based on the obtained image or the image generated in operation 626 in operation 640. In operation 625, when it is determined that multi-exposure synthesis is not possible, the electronic device may generate a modified image from the obtained image or the image generated in operation 626 in operation 628. In operation 640, the electronic device may perform synthesis, based on the modified image (modified base image or modified processed image) to obtain a multi-exposure image (or synthesized image). The image to be synthesized may include a captured image, another pre-stored image, or an image that has been synthesized until now.

Specifically, in operation 620, the electronic device may display, through the display, an image file (e.g., the image file 500 of FIG. 5) stored in the memory or a list of processed images. The image file may refer to a format (e.g., DNG) including a base image, and the processed image may refer to an image configured in a format such as JPG or PNG. However, this is not limited thereto.

In operation 622, the electronic device may receive a user selection input for the image included in the list to obtain the image. The obtained image may include a base image or a processed image. For example, the obtained image may be a base image or a processed image extracted from an image file selected by the user, and the obtained image may be a processed image which is included in the list of processed images through the display and selected by the user. When the images stored in the memory of the electronic device are images obtained by various environments (cloud, other cameras, and sensors), the images may exist in the form of processed images rather than a raw file, and a corresponding base image may not exist.

In operation 623, the electronic device may display, through the display, the image obtained in operation 622 and an interface for modifying the image. The interface that may be provided to modify the image may include image enlargement, image reduction, image rotation, and image inversion. The electronic device may clearly display an area to be synthesized with the obtained image. Therefore, when the user modifies the image by using the provided interface, the user can clearly recognize the area in which synthesis is performed in the corresponding image. For example, when the user modifies the selected image through the enlargement or reduction interface, the electronic device may divide the area to be synthesized with the selected image and an area not to be synthesized by brightness difference or a blurring level and display the areas, and may display the boundary of the synthesized area.

In operation 623-1, the electronic device may obtain image modification information input by the user through operation 623. The image modification information may include information indicating a modification of an image, such as enlargement or reduction of an image, rotation of an image, inversion of an image, and adjustment of the position of an image. When the user makes an input for modifying an image through an interface displayed on the display of an electronic device, the electronic device may receive a user input and obtain image modification information.

In operation 624, the electronic device may analyze the image obtained in operation 622. For example, the electronic device may determine the validity of the obtained image. An operation of determining the validity of an obtained image may determine whether the base image or the processed image is valid for the obtained image.

In operation 624-1, the electronic device may determine whether there is a need to generate the base image or the processed image, based on the result of the analysis in operation 624. When it is determined that the obtained image is not valid in operation 624, the electronic device may determine that there is a need to generate the base image or the processed image in operation 624-1. In operation 626, the electronic device may generate the processed image or the base image, based on the obtained image. For example, when the base image exists but the processed image does not exist in the image file obtained in operation 622, the validity of the base image may be recognized, and the validity of the processed image may be denied. Therefore, in operation 626, the electronic device may generate the processed image, based on the valid base image. On the other hand, when the processed image exists in the obtained image file, but the base image does not exist, the validity of the base image may be denied and the validity of the processed image may be recognized. In this case, in operation 626, the electronic device may generate the base image, based on the valid processed image. In another example, in operation 622, when a processed image in a format such as JPG or PNG is obtained, the base image does not exist. Accordingly, the validity of the base image may be denied, and the validity of the processed image may be recognized. In operation 626, the electronic device may generate the base image, based on the valid processed image.

When it is determined that the obtained image is valid in operation 624, the electronic device may determine that there is no need to generate the base image or the processed image in operation 624-1. In this case, operation 626 may be omitted.

In operation 625, the electronic device may determine whether multi-exposure synthesis is possible for the obtained image or an image generated in operation 626. The operation of determining whether the obtained image can be used for multi-exposure synthesis may be performed based on a sensor type, a resolution, a color space, bits used per pixel, or lens information of the obtained image, and the image modification information of the user acquired in operation 623-1. However, this is not limited thereto.

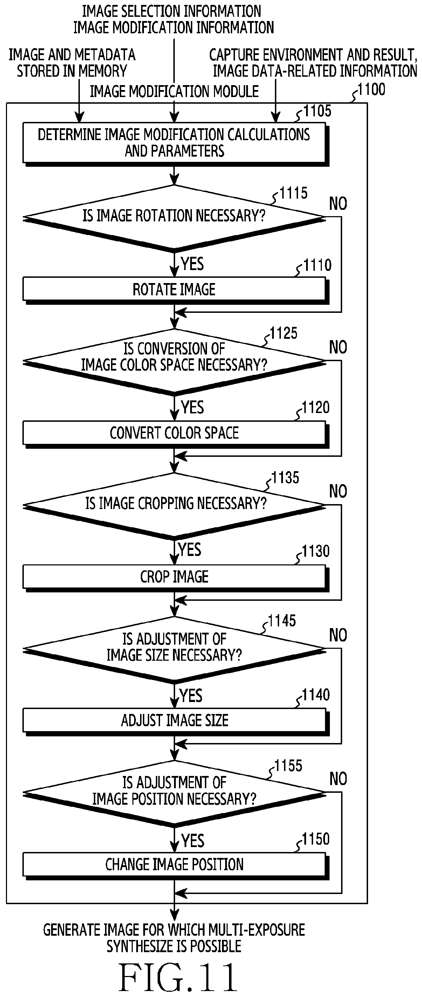

When the electronic device determines that, as a result of the analysis in operation 625, the obtained image or the image generated in operation 626 is not suitable for use in multi-exposure synthesis, the electronic device may generate a modified image suitable for multi-exposure synthesis by modifying the obtained base image or processed image in operation 628. Alternatively, the electronic device may generate a modified image suitable for multi-exposure synthesis by modifying the base image generated in operation 626 or the processed image. In operation 628, the electronic device may generate a modified image, based on the image modification information of the user obtained in operation 623-1. For example, the electronic device may rotate the basic image or the processed image. In addition, the electronic device may convert a color space of the image and remove some areas of the image. The electronic device may adjust the size of the image or change the position of the image. The image modification methods described above may be omitted or the order may be changed as necessary. A detailed image modification method regarding operation 628 will be described later in FIGS. 11 to 13.

In operation 640, the electronic device may obtain a multi-exposure image (or a synthesized image) by performing synthesis, based on the modified image (base image and processed image) generated in operation 628. For example, the electronic device may synthesize the modified base image and the modified processed image with another base image and another processed image, respectively, to obtain a synthesized base image and a synthesized processed image. In another example, the electronic device may synthesize the modified base image and the modified processed image with another base image and another processed image obtained by capture (in other words, generated by processing image sensor data output from the image sensor), thereby obtaining a synthesized base image and a synthesized processed image.

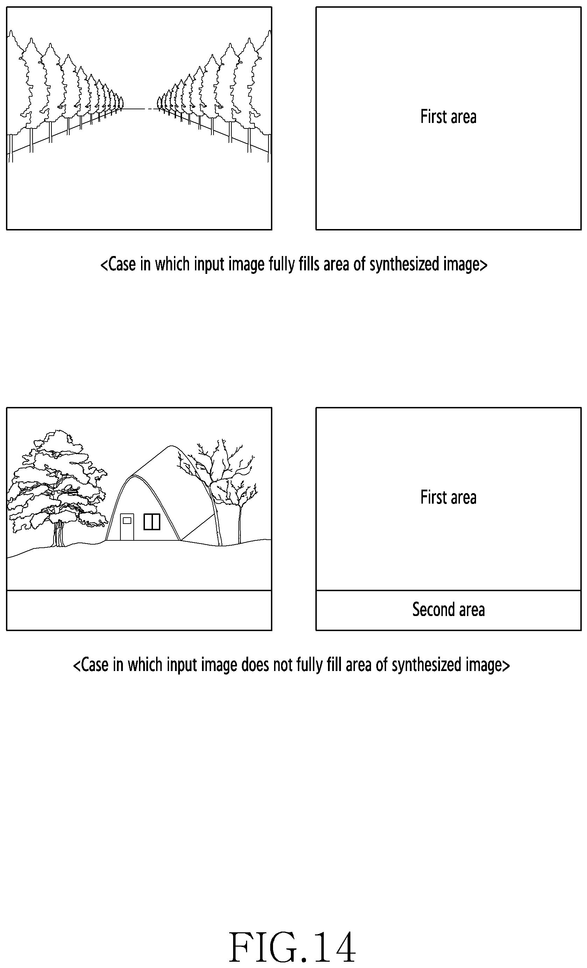

In addition, in operation 640, the electronic device may synthesize the modified image and an image to be synthesized, based on an area, and generate a synthesized image. Here, the "modified image" may indicate a modified base image or a modified processed image in operation 628, and the "image to be synthesized" may indicate an image previously obtained or an image obtained by capture. The electronic device may define an area in which the modified image and the image to be synthesized overlap as a first area, and define a non-overlapping area as a second area. In addition, the electronic device may differently apply a method of synthesizing an image in the first area and a method of synthesizing an image in the second area. In connection with operation 640, a detailed synthesis method will be described later with reference to FIG. 14 to FIG. 17.

After the synthesized image is generated, the electronic device may determine whether a multi-exposure mode end condition is satisfied in operation 650. For example, when the number of image synthesis included in a multi-exposure mode configuration value is set to N, the electronic device may determine that the multi-exposure mode end condition is satisfied when the number of synthesis through repetition of the operation reaches N. In another example, the electronic device may determine that the multi-exposure mode has ended, based on that a user input corresponding to a command to end the multi-exposure mode is received.

When the multi-exposure mode end condition is not satisfied, the electronic device may perform one or more of operations 610 to 640. For example, when the number of synthesis is set to 3, the electronic device may obtain a first image by capture, and then perform one or more of operations 610 to 640 to obtain a synthesized image. Based on this point, the number of synthesis is 2, which is smaller than 3 corresponding to the configured number of synthesize, so one or more of operations 610 to 640 may be performed again. Thereafter, the number of synthesize may be 3, the multi-exposure end condition may be satisfied, and the electronic device may store the finally generated synthesized image result in the memory in operation 660. In addition, the electronic device may identify whether the multi-exposure mode ends in operation 670, and end the multi-exposure mode according thereto.

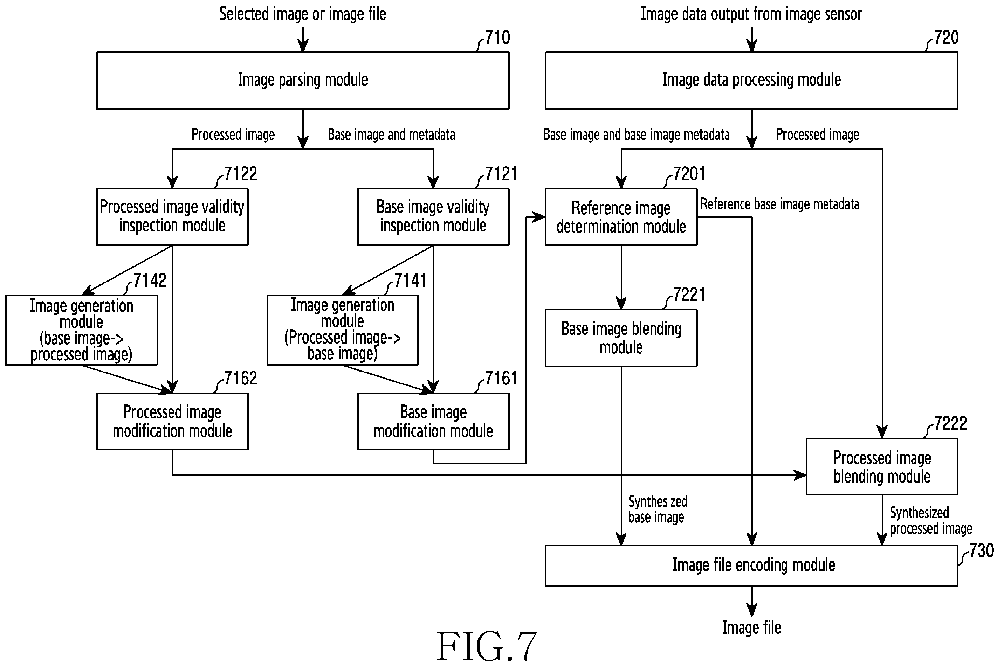

FIG. 7 is a block diagram of an electronic device performing a method for obtaining a multi-exposure image according to an embodiment. Referring to FIG. 7, the electronic device may include an image parsing module 710, image validity inspection modules 7121 and 7122, image generation modules 7141 and 7142, image modification modules 7161 and 7162, an image data processing module 720, a reference image determination module 7201, image blending modules 7221 and 7222, and an image file encoding module 730.

The image parsing module 710 may extract an image selected by an image selection input of the user. For example, the image parsing module 710 may extract a base image and a processed image included in the corresponding image file from the image file from the image file selected by the user (e.g., the image file 500 of FIG. 5). Alternatively, when the image selected by the user corresponds to a processed image, the image parsing module 710 may transmit the corresponding processed image as it is. The image parsing module 710 may perform an operation of obtaining an image in operation 622 of FIG. 6. The image file input into the image parsing module 710 may include an image file configured in a base image file format. The image file configured in the base image file format may be stored in the memory of the electronic device 101. In an embodiment, the electronic device 101 may generate the image file configured in the base image file format from the processed image.

The image validity inspection module 7121 or 7122 may inspect the validity of the basic image and the processed image extracted from the image parsing module 710. The image validity inspection modules 7121 and 7122 may include a base image validity inspection module 7121 and a processed image validity inspection module 7122. The base image validity inspection module 7121 may perform validity inspection on the base image extracted by the image parsing module 710. When the extracted base image is not valid or when a base image does not exist, the base image validity inspection module 7121 may determine that the base image is not valid. The processed image validity inspection module 7122 may perform validity inspection on the processed image extracted by the image parsing module 710. When the extracted processed image is not valid or the processed image does not exist, the processed image validity inspection module 7122 may determine that the processed image is not valid. The image validity inspection modules 7121 and 7122 may perform an operation of analyzing the image obtained in operation 624 of FIG. 6.

The image generation modules 7141 and 7142 may generate the base image or the processed image, based on the validity inspection result performed by the image validity inspection modules 7121 and 7122. For example, when the base image is valid and the processed image is not valid in the validity inspection result of the image validity inspection modules 7121 and 7122, the image generation modules 7141 and 7142 may generate a processed image, based on the valid base image. In another example, when the base image is not valid and the processed image is valid in the validity inspection result of the image validity inspection modules 7121 and 7122, the image generation modules 7141 and 7142 may generate the basic image, based on the valid processed image. The image generation modules 7141 and 7142 may include a base image generation module 7141 and a processed image generation module 7142. The image generation modules 7141 and 7142 may perform operation 626 of FIG. 6.

The image inspection modules 7161 and 7162 may modify the valid base image or the valid processed image to be suitable for synthesis for obtaining a multi-exposure image. For example, the image modification modules 7161 and 7162 may modify the image to be suitable for multi-exposure synthesis by performing at least one of operations of rotating the image, converting a color space of the image, removing a part of the image (image cropping), adjusting the size of the image, and changing the position of the image. The image modified by the image modification modules 7161 and 7162 may be synthesized with an image based on data output from the image sensor by capture or an image synthesized up to now. The image modification modules 7161 and 7162 include a base image modification module 7161 configured to modify a base image, and a processed image modification module 7162 configured to modify a processed image. The image modification modules 7161 and 7162 may perform operation 628 of FIG. 6.

The image data processing module 720 may process image sensor data output from the image sensor (e.g., the image sensor 230 of FIG. 2 or FIG. 3) to generate a base image, metadata, and a processed image. The image data processing module 720 may correspond to the image signal processor 260 of FIG. 2, and the Bayer/raw processing engine 410 and the image processing engine 420 of FIG. 4. The base image and metadata generated by the image data processing module 720 are transferred to a reference image determination module, and the processed image generated by the image data processing module 720 is transferred to the processed image blending module 7222. The image data processing module 710 may perform operation 632 in FIG. 6.

The reference image determination module 7201 receives the modified base image from the base image modification module 7161 and the base image and relevant metadata generated by the image data processing module 720. The reference image determination module may determine a reference base image and reference metadata, based on the received base images and metadata.

The image blending modules 7221 and 7222 include a base image blending module 7221 and a processed image blending module 7222. The base image blending module 7221 may synthesize the basic image modified by the basic image modification module 7161 and the base image generated by the image data processing module 720, based on an area. The processed image blending module 7222 may synthesize the processed image modified by the processed image modification module 7162 and the processed image generated by the image data processing module 720, based on an area. The image blending modules 7221 and 7222 may perform operation 640 of FIG. 6, and the operation of generating the area-based synthesized image is described with reference to FIGs. 14 to 17.

The image file encoding module 730 may receive the above-described reference metadata, and the synthesized base image and synthesized processed image generated by the image blending modules 7221 and 7222 to generate an image file. The generated image file may include the synthesized base image, the synthesized processed image, and the reference metadata.

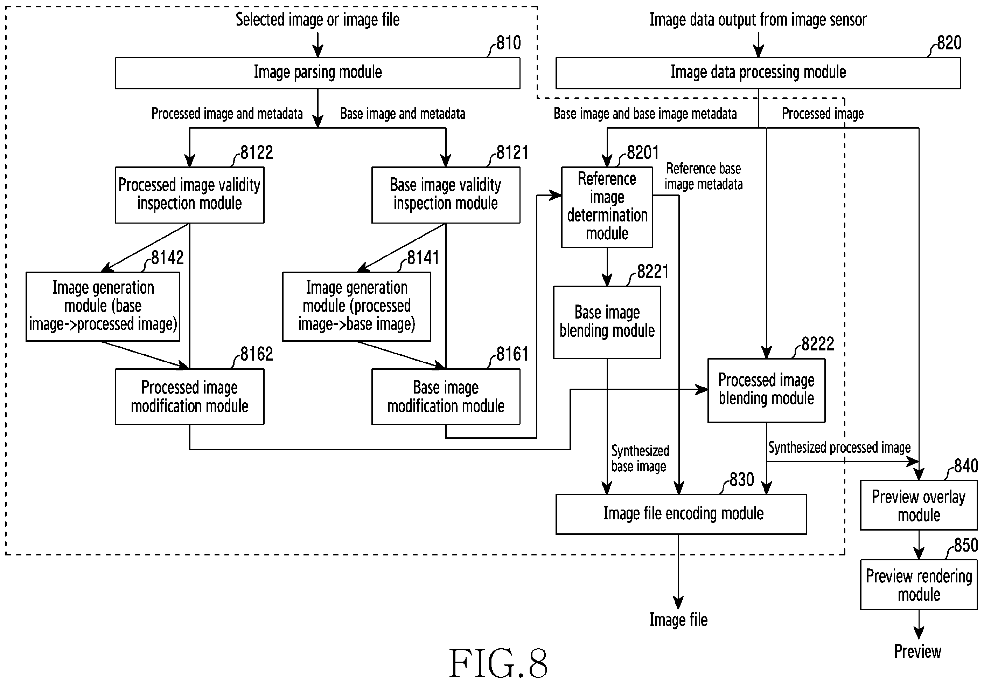

FIG. 8 is a block diagram of an electronic device performing a method of obtaining a multi-exposure image according to an embodiment. Referring to FIG. 8, the electronic device may include an image parsing module 810, image validity inspection modules 8121 and 8122, image generation modules 8141 and 8142, image modification modules 8161 and 8162, an image data processing module 820, a reference image determination module 8201, image blending modules 8221 and 8222, or an image file encoding module 830. The operation of the components is described in FIG. 7 and thus omitted here.

Referring to FIG. 8, the electronic device may further include a preview overlay module 840 and a preview rendering module 850.

In an embodiment, the preview overlay module 840 may receive a processed image synthesized by the processed image blending module 8222. The preview overlay module 840 may overlay the processed image output from the image data processing module 820 on the synthesized processed image. The image data processing module 820 may stream the processed image to the preview overlay module 840, based on a rendering cycle of the preview image. The preview rendering module 850 may render the image obtained by overlaying the processed image updated every rendering cycle on the synthesized processed image, and output a preview image. Therefore, the electronic device may output the preview image for the synthesized image through the display.

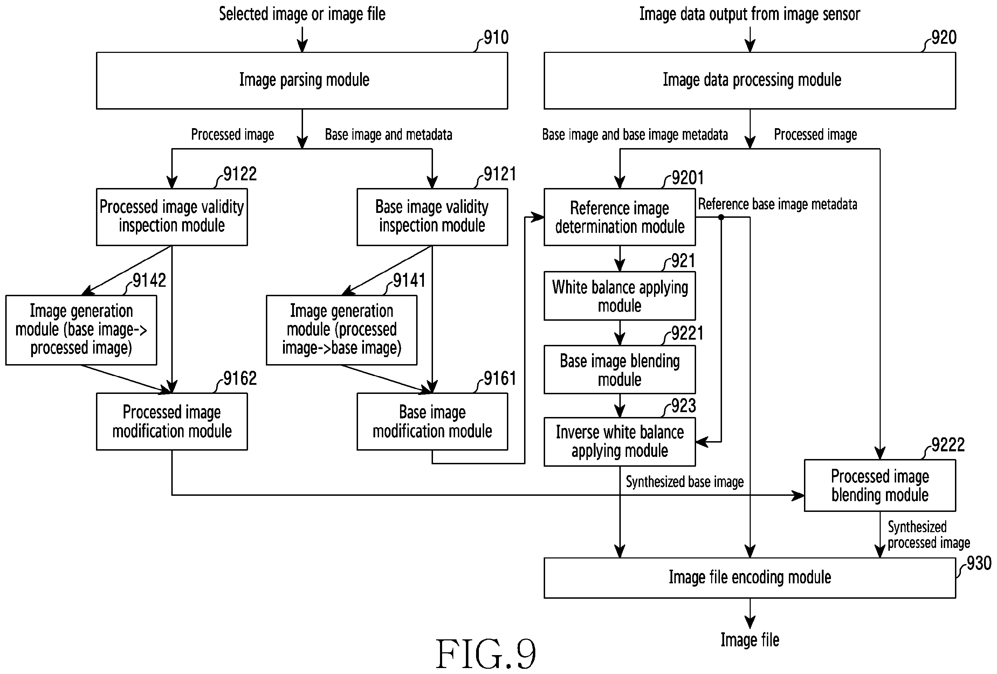

FIG. 9 is a block diagram of an electronic device performing a method of obtaining a multi-exposure image according to an embodiment. The electronic device may include an image parsing module 910, image validity inspection modules 9121 and 9122, image generation modules 9141 and 9142, image modification modules 9161 and 9162, an image data processing module 920, a reference image determination module 9201, image blending modules 9221 and 9222, or an image file encoding module 930. The operation of the components is described in FIG. 7 and thus omitted here.

Referring to FIG. 9, the electronic device may further include a white balance applying module 921 and an inverse white balance applying module 923.

In an embodiment, image sensor data 800 output from the image sensor module 230 may be input into the image data processing module 920. When a capture event occurs in the multi-exposure mode, the image data processing module 920 may process the image sensor data 800 and output a base image and metadata.

The reference image determination module 9201 may determine a reference image among the multiple base images output from the image data processing module 920 and the modified basic images output from the base image modification module 9161. Reference metadata corresponding to the reference image may be included in the image file generated by the image file encoding module 930.

The white balance applying module 921 may apply white balancing to the base image, based on the metadata corresponding to the base image, to correct color information of the base image. The white balance applying module 921 may extract a white balancing parameter from the metadata and correct the base image to have a value considering white balancing. This process may be applied to all base images captured based on the multi-exposure mode and the base images modified by the base image modification module 9161.

The base image to which white balancing has been applied may be transferred to the base image blending module 9221. The base image blending module 9221 may synthesize the base images to which white balancing has been applied, based on an area, according to a configured synthesis mode.

In an embodiment, the inverse white balance applying module 923 may extract a white balancing parameter from the reference metadata. When an end condition for the multi-exposure mode-based capture is satisfied, the finally synthesized base image may be inversely converted using the white balancing parameter extracted from the reference metadata. The inverse conversion process may be performed based on the conversion used by the white balance applying module 921. The inverse conversion process may be approximately configured. The synthesized base image output by the inverse white balance applying module 923 may be transferred to the image file encoding module 930.

In an embodiment, the image file encoding module 930 may encode an image file including the synthesized base image and the reference metadata.

In an embodiment, the image data processing module 920 may further output a pot-processed image obtained through the performance of image processing on the image sensor data. The processed image output by the image data processing module 920 and the processed image modified by the processed image modification module 9162 may be synthesized based on an area by the processed image blending module 9222. The synthesized processed image may be included in the image file by the image file encoding module 930.

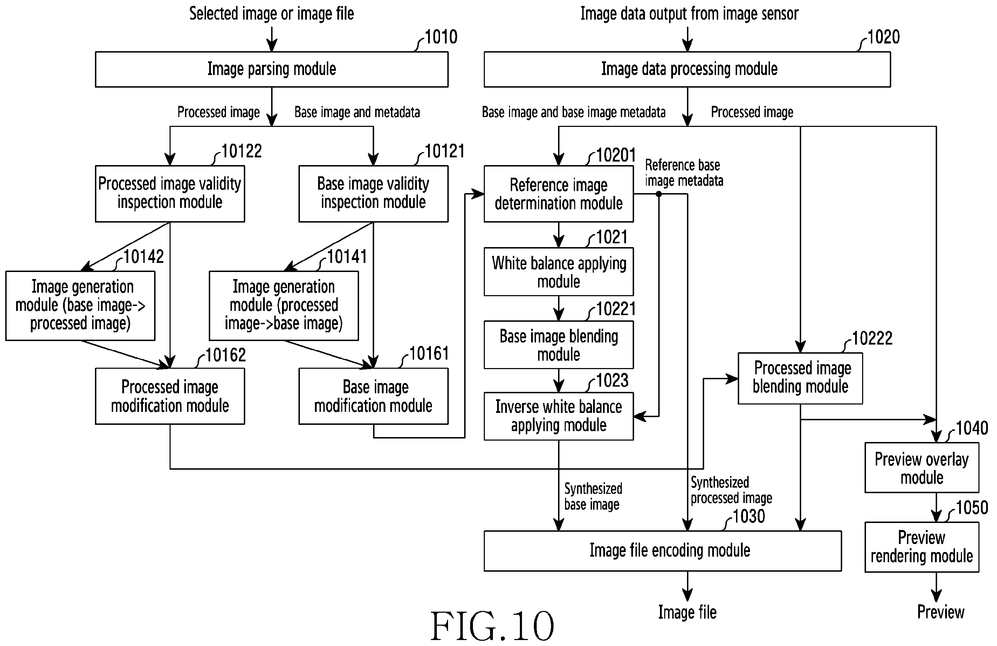

FIG. 10 is a block diagram of an electronic device performing a method of obtaining a multi-exposure image according to an embodiment. Referring to FIG. 10, the electronic device may include an image parsing module 1010, image validity inspection modules 10121 and 10122, image generation modules 10141 and 10142, image modification modules 10161 and 10162, an image data processing module 1020, a reference image determination module 10201, image blending modules 10221 and 10222, or an image file encoding module 1030. In addition, the electronic device may further include the white balance applying module 1021 and the inverse white balance applying module 1023, and may further include the preview overlay module 1040 and the preview rendering module 1050. The description of the operation of the component blocks expressed in FIG. 10 has been described above with reference to FIGs. 7 to FIG. 9.

In an embodiment, the image parsing module 1010 may acquire a base image or a processed image from an image pre-stored in the memory, and the image validity inspection modules 10121 and 10122 may inspect the validity of the obtained image. The image generation module 10141 or 10142 may generate a processed image from a base image or generate a base image from a processed image, based on the image validity inspection result. In addition, the image modification modules 10161 and 10162 may modify a valid base image or a processed image to be suitable for multi-exposure synthesis.

In an embodiment, the image data processing module 1020 may process image sensor data output from the image sensor by capture to generate a base image, metadata, and a processed image. The reference image determination module 10201 may receive the base image generated by the image data processing module 1020 and the base image modified by the base image modification module 10161, and determine a reference base image and reference metadata. The white balance applying module 1021 may apply white balancing to the received base images, and the base image blending module 10221 may synthesize the base images to which white balancing has been applied, based on an area to generate a synthesized base image. The inverse white balance applying module 1023 may inversely convert the synthesized base image by using a white balancing parameter extracted from the reference metadata. The inverse conversion process may be performed based on the conversion used by the white balance applying module 1021.

In an embodiment, the processed image blending module 10222 may receive the processed image generated by the image data processing module 1020 and the processed image modified by the processed image modification module 10162, and synthesize the processed images, based on an area, to generate a synthesized processed image.

In an embodiment, the image file encoding module 1030 may receive the synthesized base image, the synthesized processed image, and the reference metadata to generate an image file.

In an embodiment, the preview overlay module 1040 may receive the processed image synthesized by the processed image blending module 10222. The preview overlay module 1040 may overlay the processed image output from the image data processing module 1020 on the synthesized processed image. The preview rendering module 1050 may render the image on which the processed image is overlaid and output the preview image. Therefore, the electronic device may output the preview image for the synthesized image through the display.

FIG. 11 illustrates a method of modifying an image to obtain a multi-exposure image according to an embodiment. Referring to FIG. 11, the image modification method according to an embodiment may be performed by an image modification module 1100.

In an embodiment, the image modification module 1100 may determine whether to perform an operation module for image modification, and parameters for performing the operation module in consideration of the image to be modified (or input image), metadata corresponding thereto, capture environments and results, image file information, user image selection information, and image modification information in operation 1105.

In an embodiment, the image modification module 1100 may modify an image selected by the user, based on the user image selection information and the image modification information applied to the selected image. The user image modification information may refer to information that the user inputs through a screen provided in the interface form to be used for synthesizing the selected image. For example, the user may perform an input to rotate, enlarge, reduce, or invert the selected image to determine an area to be synthesized in the selected image. The electronic device may receive input information on a rotation angle, a enlarged or reduced area, and an inversion operation that the user has configured through a graphic interface. The image modification module 1100 may determine a modification calculation for image modification and a parameter necessary therefor, based on the user image selection information and image modification information, and may modify the image according to the content modified by the user. The electronic device may obtain the user image selection information and the image modification information through operation 622 and operation 623-1 of FIG. 6, respectively.

In an embodiment, the image modification module 1100 may determine whether rotation of the image is necessary in operation 1115, and rotate the image if necessary in 1110. For example, in the case of image rotation, the image modification module 1100 may determine whether image rotation is necessary, based on orientation information of a device in which an input image is captured and current orientation information of the device. When image rotation is necessary, the image modification module 1100 may determine a rotation angle (e.g., 90°, 180°, 270°, etc.) and rotate the image. In addition, the image modification module may determine whether the image rotation is necessary, based on the users image modification information, and may rotate the image if necessary.

In an embodiment, the image modification module 1100 may determine whether conversion of a color space of the image is necessary in operation 1125), and may convert the color space of the image if necessary in operation 1120. For example, when the color space in which the input image is expressed is different from a color space that should be included in a result image file (e.g., a Raw file), the image modification module 1100 may convert the color space of the input image. For example, when the color space of the input image is a Bayer type, and a color space of a linear RGB type should be stored in the image file (e.g., a DNG), the image modification module 1100 may convert the color space of the input image from the Bayer type to the linear RGB type. In addition, the image modification module may determine, based on the user image modification information, whether conversion of the color space the image is necessary, and convert the color space of the image if necessary.

In an embodiment, the image modification module 1100 may determine whether image cropping is necessary in operation 1135), and remove some areas of the image if necessary in operation 1130. When the aspect ratio of the input image is different from that of the result image (or the synthesized image), the image modification module 1100 may remove a part of the input image to make the aspect ratio of the input image identical to the aspect ratio of the result image. The part removed from the input image may be determined by the user or automatically determined by a system. The size of the synthesized image may be determined by a configuration of the multi-exposure mode. In addition, the image modification module may determine, based on the user image modification information, whether to crop the image, and crop the image if necessary.

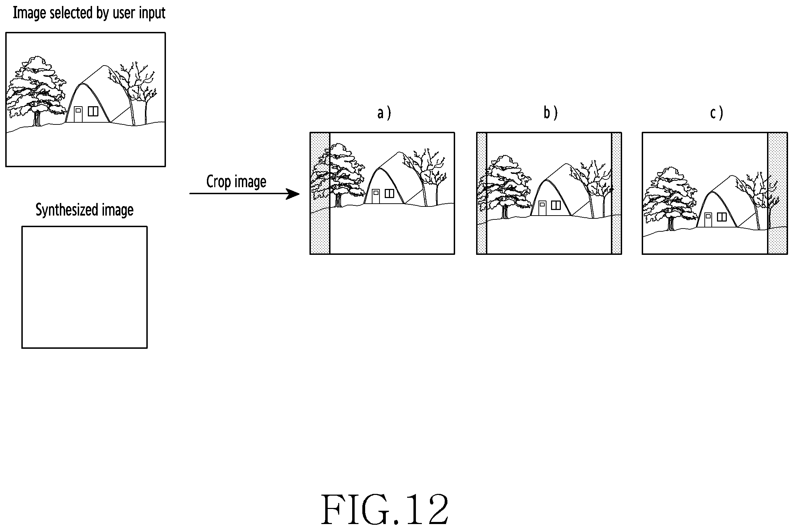

In this regard, FIG. 12 is an example of performing an operation for cropping an image by the image modulation module 1100 according to an embodiment.

Referring to FIG. 12, the size of an image (hereinafter, an input image) selected by a user input is larger than the size of a synthesized image (or a multi-exposure image). For example, the input image may be an image having a width of 4000 pixels and a height of 3000 pixels, and the synthesized image may have a width of 3900 pixels and a height of 3000 pixels. In this case, the vertical lengths of the images are the same, but the horizontal length of the input image is longer than the horizontal length of the synthesized image. Therefore, the image modification module 1100 may modify the input image by removing a part of the input image such that a shape of the input image is the same as that of the synthesized image.

In an embodiment, the image modification module 1100 may remove a left area of the input image (a), remove areas of the same size from the left and right of the input image (b), or remove a right area of the input image. However, the position of the area removed by the image modification module 1100 is not limited thereto.

In an embodiment, the image modification module 1100 may determine whether adjustment of the size of the image is necessary in operation 1145, and adjust the size of the image if necessary in operation 1140. For example, when the aspect ratio of the input image is different from that of the synthesize image, the image modulation module 1100 may adjust the size of the input image so that the entire area of the input image is expressed in the synthesized image. That is, the image modification module 1100 may adjust the size of the input image such that the horizontal and vertical lengths of the input image do not exceed the horizontal and vertical lengths of the synthesized image. Therefore, the input image having the adjusted size has a horizontal or vertical length smaller than or equal to the synthesized image. In addition, the image modification module may determine whether adjustment of the size of the image is necessary, based on the user image modification information, and adjust the size of the image if necessary.

In an embodiment, the image modification module 1100 may determine whether adjustment of the position of the image is necessary in operation 1155) and adjust the position of the image if necessary in operation 1150. When the size is adjusted while the aspect ratio of the input image is maintained, the input image having the adjusted size may have a smaller size than the synthesized image. Therefore, the image modification module 1100 may adjust where to place the input image having the adjusted size within the area of the synthesized image. In addition, the image modification module may determine whether adjustment of the position of the image is necessary, based on the user image modification information, and may adjust the position of the image if necessary.

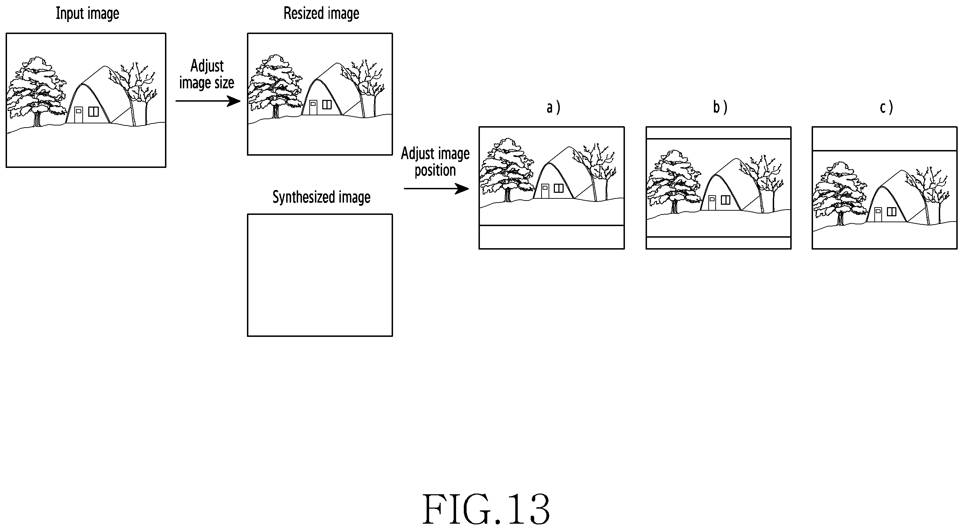

In this regard, FIG. 13 illustrates an example in which the image modification module 1100 performs an image size adjustment operation and an image position adjustment operation according to an embodiment.

Referring to FIG. 13, the image modification module 1100 may adjust the size of the input image, based on the synthesized image. For example, when the size of the input image is 4000 x 3000 pixels, and the size of the synthesized image is 3900 x 3000 pixels, the image modification module 1100 may adjust the size of the input image to obtain an image having the size of 3900 x 2925 pixels. In other words, the image modification module 1100 may adjust the size of the input image, based on the horizontal length of the synthesized image. In the above example, since the aspect ratio of the input image having the adjusted size is maintained, the vertical length of the input image having the adjusted size is smaller than that of the synthesized image. The image modification module 1100 may adjust the position of the input image having the adjusted size. For example, the image modification module 1100 may place the input image having the adjusted size to match the top of the synthesized image (a), place the input image having the adjusted size in the middle of the synthesized image (b), or place the input image having the adjusted size to match the bottom of the synthesized image. The image modification module 1100 may place one corner of the input image to match one corner of the synthesized image, and may also place the input image within the area of the synthesized image. The position of the input image may be determined by the user or automatically determined by the system.

FIG. 14 illustrates an example of area division of a multi-exposure image according to an embodiment.

In an embodiment, the image modified by the image modification module (e.g., the image modification module of FIG. 7) and the image generated by the image data processing module (e.g., the image data processing module of FIG. 7) may be used for multi-exposure synthesis based on an area. In this case, the area according to an embodiment may be divided as follows.

Referring to FIG. 14, a case where an input image used for synthesis fully fills an area of a synthesized image and a case where it does not are illustrated. In this case, the overlapping area of the area of the synthesized image and the area of the input image may be a first area, and the non-overlapping area of the area of the synthesized image and the area of the input image may be a second area. When a pre-stored image is used for multi-exposure synthesis according to an embodiment of the disclosure, if the aspect ratio of the pre-stored image is different from that of the synthesized image, the size of the input image may not be able to fill the area of the synthesized image. In this case, a pre-stored image selected by a user input may be divided into a first area which overlaps with the area of the synthesized image, and a second area which does not overlap.

An electronic device and a method according to an embodiment of the disclosure may perform multi-exposure synthesis by dividing the area and generate the synthesized image as described above.

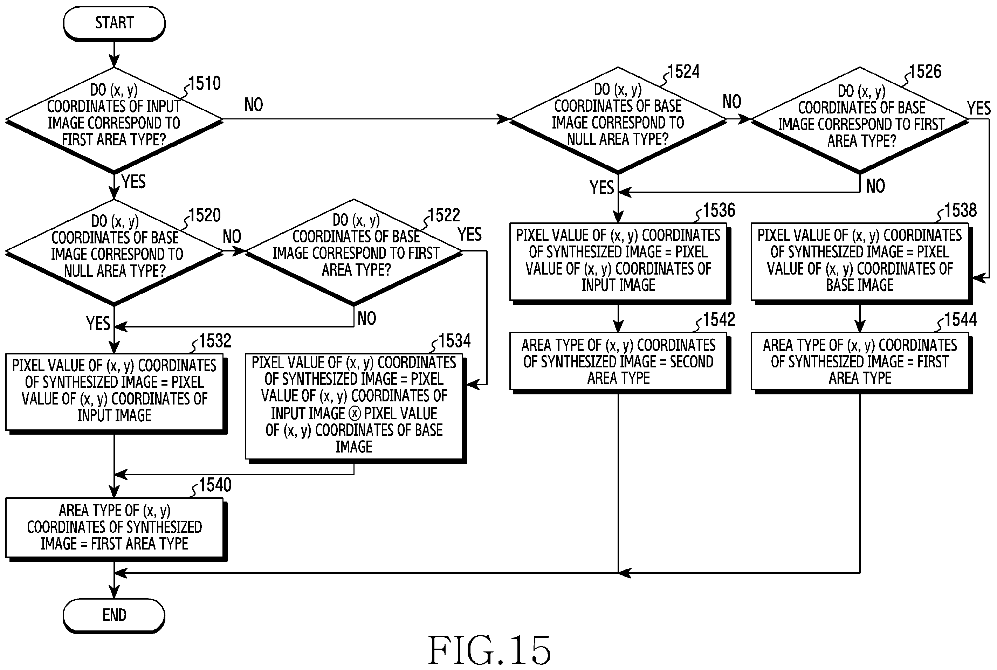

FIG. 15 is a flowchart illustrating a process of determining x and y coordinate pixel values of a synthesized image according to an embodiment. Referring to FIG. 15, the electronic device may divide an area type to synthesize images.

A first area type may indicate an area including pixels having a value based on an image (a base image or a processed image) selected by the user. For example, in the case of an input image for which an image modification process (size adjustment or cropping) has been performed based on the image selected by the user, the area including pixels having a value based on a pixel value of the image before the modification may correspond to the first area type.

A second domain type may indicate an area including pixels based on a value added in the process of generating the input image. For example, the area including pixels other than those of the first area type in the input image may correspond to the second area type. The pixels corresponding to the second area type may have no value, or may be configured as a specific value representing an arbitrary color (white or black).

A null area type may indicate an area in which a pixel value does not exist. A base image may indicate an image to be synthesized with the input image. The base image may be configured as a null area in which a pixel value is absent initially. In addition, the base image may include an image captured by a camera module or a synthesized image obtained through synthesis of two or more images.

Referring to FIG. 15, the electronic device may determine a pixel value of the synthesized image, based on types of the areas of the input image and the base image (or an image to be synthesized).

In operation 1510, the electronic device may determine whether a pixel corresponding to an x and y coordinates of the input image is the first area type. That is, the electronic device may determine whether the pixel corresponding to the x and y coordinates of the input image is located inside the first area. When the pixel corresponding to the x, y coordinates of the input image is the first area type, the electronic device may determine whether the pixel corresponding to the x and y coordinates of the base image is the null area type in operation 1520. When the pixel corresponding to x and y coordinates of the base image corresponds to the null area type, the electronic device may determine a value of a pixel corresponding to the x and y coordinates of the synthesized image as a pixel value corresponding to the x and y coordinates of the input image in operation 1532. When the pixel corresponding to the x and y coordinates of the base image does not correspond to the null area type, the electronic device may determine whether the pixel corresponding to the x and y coordinates of the base image is the first area type in operation 1522. When the pixel corresponding to the x and y coordinates of the base image is not the first area type, the electronic device may perform operation 1532. When the pixel corresponding to the x and y coordinates of the base image is the first are type, the electronic device may determine the value of the pixel corresponding to the x and y coordinates of the synthesized image, based on the value of the pixel corresponding to the x and y coordinates of the input image and the value of the pixel corresponding to the x and y coordinates of the base image in operation 1534. In addition, the pixel corresponding to the x and y coordinates of the synthesized image may be determined as the first area type in operation 1540.

When the pixel corresponding to the (x, y) coordinated of the input image is not the first are type, the electronic device may determine whether the pixel corresponding to the (x, y) coordinates of the base image is the null area type in operation 1524. When the pixel corresponding to the (x, y) coordinates of the base image corresponds to the null area type, the electronic device may determine the value of the pixel corresponding to the (x, y) coordinates of the synthesized image as the pixel value corresponding to the (x, y) coordinates of the input image in operation 1536. In addition, the area type of the pixel corresponding to the (x, y) coordinates of the synthesized image may be determined as the second area type.

In operation 1524, when the pixel corresponding to the (x, y) coordinates of the base image does not correspond to the null area type, the electronic device may determine whether the pixel corresponding to the (x, y) coordinates of the base image is the first area type in operation 1526. When the pixel corresponding to the (x, y) coordinates of the base image is the first area type, the electronic device may determine the value of the pixel corresponding to the (x, y) coordinates of the synthesized image as the pixel value corresponding to the (x, y) coordinates of the base image in operation 1538. Alternatively, when the pixel corresponding to the (x, y) coordinates of the base image is the first area type, the electronic device may determine the value of the pixel corresponding to the (x, y) coordinates of the synthesized image, based on the value of the pixel corresponding to the (x, y) coordinates of the base image and the value of the pixel corresponding to the (x, y) coordinates of the input image. The value of the pixel corresponding to the (x, y) coordinates of the input image may be a specific value indicating an arbitrary color. The pixel corresponding to the (x, y) coordinates of the synthesized image may be determined as the first area type in operation 1544.

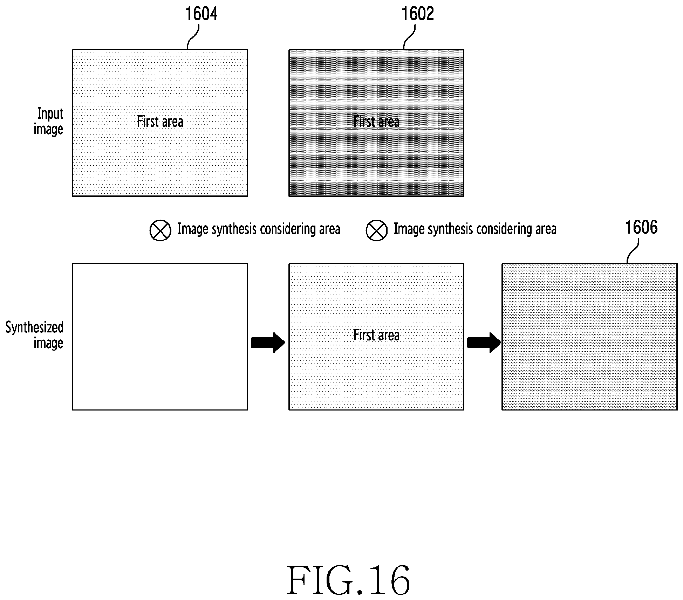

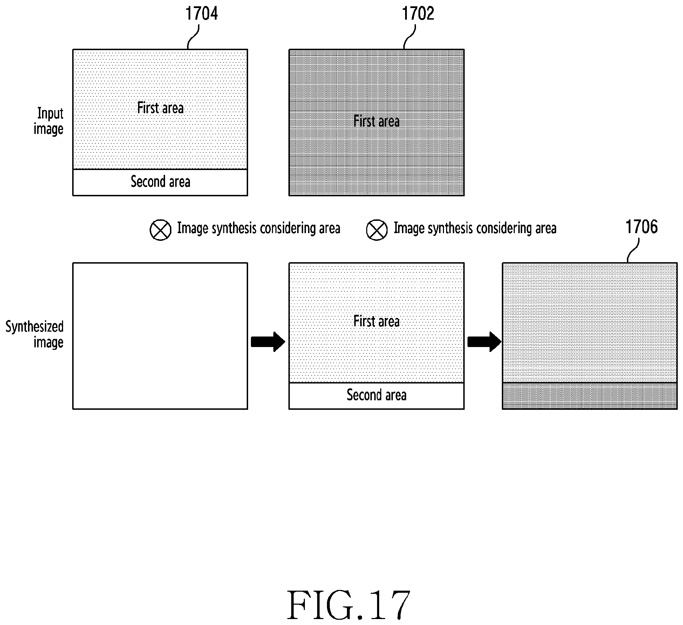

FIG. 16 and FIG. 17 illustrate an example of area-based image synthesis according to an embodiment.

FIG. 16 is an example in which, after entering a multi-exposure mode, an electronic device obtains a captured image 1604 through "capture," and generates a synthesized image 1606 by synthesizing an input image 1602 selected by the user. The captured image 1604 may indicate a base image or a processed image generated through processing of image sensor data output from the image sensor. The input image 1602 may indicate a base image or a processed image acquired based on a user selection from the image pre-stored in the memory.

In an embodiment, since the capture operation is performed based on the configuration of a multi-exposure mode, the entire area of the captured image 1604 may overlap the entire area of the synthesized image. Therefore, the entire area of the captured image 1604 may be divided as the first area. In addition, as illustrated in the drawing, when the entire area of the input image 1602 overlaps the area of the synthesized image, the entire area of the input image 1602 may be divided as the first area. The area of the initially configured synthesized image is an empty area in which there is no data, and when the captured image 1604 is synthesized with the area of the synthesized image, the synthesized image may be calculated to be identical to the captured image 1604. In addition, when the input image 1602 is additionally synthesized with the area of the synthesized image with which the captured image 1604 is synthesized, the synthesized image in which the captured image 1604 and the input image 1602 are synthesized may be calculated. In this case, the pixel corresponding to the first area of the synthesized image may have a pixel value based on the data of the input image 1602 and the captured image 1604 and the synthesis mode. For example, when the synthesis mode is determined as an average or a value corresponding thereto by the user, the pixel corresponding to the first area of the synthesized image may have an average value of the data of the input image 1602 and the captured image 1604. However, the synthesis method is not limited thereto, and the pixel value corresponding to the first area of the synthesized image may be calculated based on a maximum value, a minimum value, a median value, etc. of the data of the input image 1602 and the captured image 1604, according to the synthesis mode.

In an embodiment, FIG. 17 illustrates an example in which, after entering a multi-exposure mode, the electronic device divides an input image 1704 and a captured image 1702 for each area and synthesizes the images. When the electronic device performs multi-exposure synthesis based on an image pre-stored in the memory, a format of the obtained image, such as the aspect ratio or size, may be different from that of the synthesized image. Therefore, the electronic device may generate an input image 1704 for multi-exposure synthesis by modifying the obtained image. The generated input image may include a first area including pixels based on a pixel value of the original image and a second area corresponding to the remaining areas excluding the first area. The pixels belonging to the second area in the input image 1704 may have no pixel value or have a specific value indicating an arbitrary color.

In an embodiment, the area of the initially configured synthesized image may be an empty area having no data. The electronic device may synthesize the input image 1704 in the area of the initially configured synthesized image (first synthesis). In addition, the electronic device may further synthesize the captured image 1702 in addition to the synthesized image with which the input image 1704 is synthesized (second synthesis). In this case, the pixels corresponding to the first area of the synthesized image 1706 may have a pixel value based on the pixel values of the input image 1704 and the captured image 1702. For example, the pixel corresponding to the first area of the input image 1704 in the synthesized image 1706 may be calculated based on the input image 1704 and the captured image 1702. In addition, the pixel corresponding to the second area of the input image 1704 in the synthesized image 1706 may be calculated based on at least one of the captured image 1702 or a value an arbitrary color. Furthermore, the entire synthesized image 1706 may be defined as the first area for synthesis in the next round.

As described above, the electronic device and the method according to embodiments of the disclosure may apply different synthesis methods for respective areas by dividing the areas when performing multi-exposure synthesis. Therefore, when performing synthesis by using a pre-stored image, the electronic device and the method according to the embodiments may generate a synthesized image by applying a separate synthesis method to an area having no pixel value or a randomly configured value in the input image.

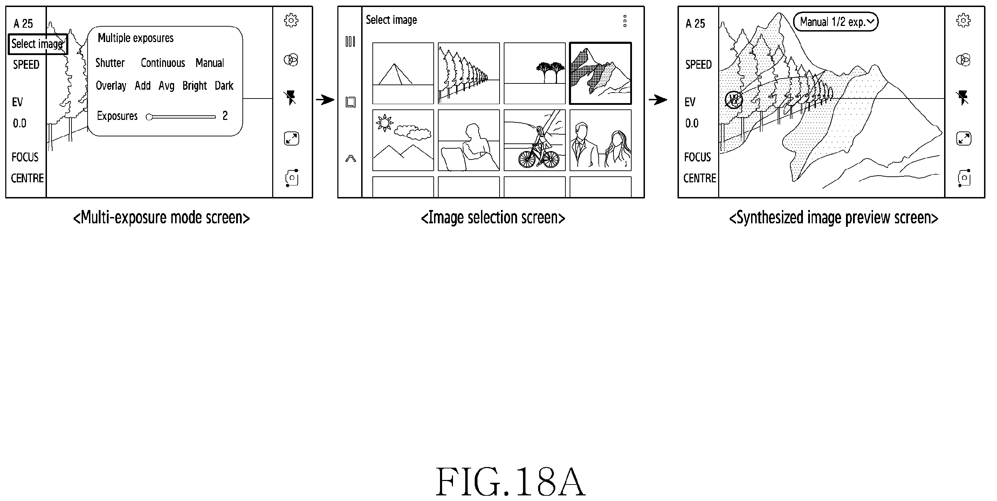

FIG. 18A illustrates a UX/UI order of a multi-exposure mode screen displayed on a display of an electronic device according to an embodiment.

Referring to FIG. 18A, the electronic device may display the multi-exposure mode screen through the display (e.g., the display 310 of FIG. 3). The multi-exposure mode screen according to an embodiment may include an interface for adjusting a configuration value (e.g., the number of synthesis, a synthesis method, and the like) of the multi-exposure mode, and may include a button (e.g., a "Select image" button) for displaying images stored in the memory.

When the user selects the "Select image" button and the electronic device receives the corresponding input, the electronic device may display an image selection screen that displays a list of images stored in the memory. The image selection screen according to an embodiment may display multiple images as images of appropriate sizes, and the user may view the multiple images. The user may select one of the displayed images. The images displayed on the image selection screen may indicate an image file (e.g., image file 500 of FIG. 5) or a processed image (e.g., processed image 530 of FIG. 5).

When the user selects one of the listed images through the image selection screen, the electronic device receives an input for the user selection. In addition, the electronic device may generate a synthesized image by using the selected image as the input image for multi-exposure synthesis. Alternatively, the electronic device may generate or modify an image, based on the selected image, to generate an input image for multi-exposure synthesis. The input image may be synthesized with the captured image, or may be additionally synthesized with a synthesized image synthesized up to now. In addition, the electronic device may display a preview screen of the generated synthesized image through the display. The user may identify the synthesis result through the preview screen. Such an operation of displaying the preview screen may be performed by the preview overlay module or the preview rendering module of FIG. 8 or FIG. 10.

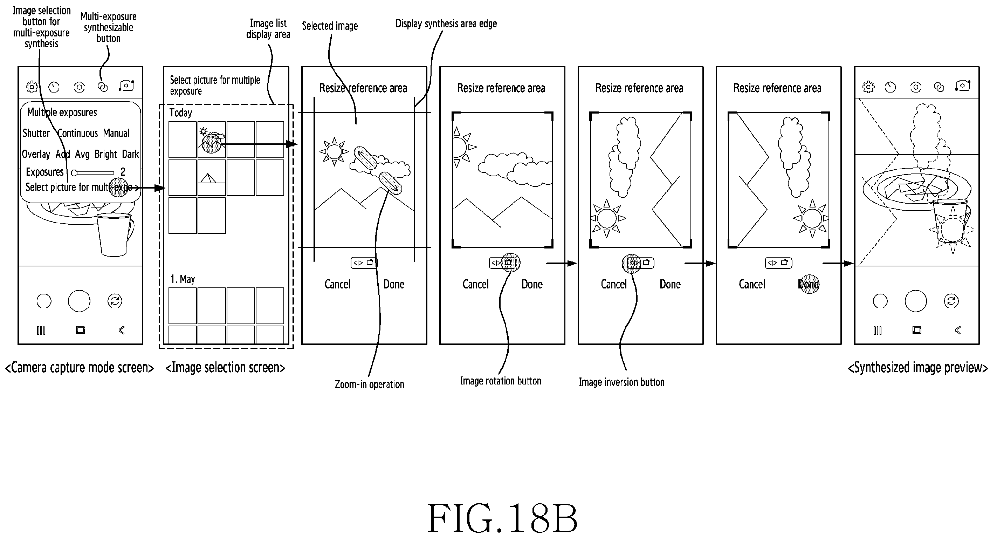

FIG. 18B illustrates a UX/UI of a multi-exposure synthesis mode screen displayed on a display of an electronic device according to an embodiment.

Referring to FIG. 18B, when the user selects a multi-exposure synthesis function button on the camera capture mode screen, the electronic device may display, on the display, a configuration area in which the multi-exposure synthesis mode can be configured. The configuration area may include an image selection button ("Select picture for multi expo") for multi-exposure synthesis. When the user selects the image selection button and the electronic device receives the corresponding input, the electronic device may display an image selection screen for displaying images stored in the memory in the form of a list. The image selection screen according to an embodiment includes an image list display area in which multiple images are displayed as images of an appropriate size, and the user may view the multiple images. In addition, the user may select one of the displayed images. Images displayed on the image selection screen may indicate an image file (e.g., the image file 500 of FIG. 5) or a processed image (e.g., the processed image 530 of FIG. 5).

When the user selects an image, the electronic device may display the selected image and an interface capable of modifying the selected image together on the display. In this case, the electronic device may display an edge line for indicating an area in which synthesis is performed in the selected image. When the selected image has the same aspect ratio (e.g., 3:4) as the area in which synthesis is performed, all areas of the selected image may correspond to the synthesized area.

On the image modification screen, when the user performs a zoom-in operation or selects an image rotation button or an image inversion button, the electronic device may enlarge the selected image, or rotate or invert the selected image and display the same on the display. The electronic device may display the selected image within the area (internal display area of the synthesized area edge) in which synthesis is performed. In addition, when the user selects a "Done" button to end image modification, the electronic device may display a preview screen obtained by synthesizing the modified image from the selected image and the image received through the current image sensor on the display. When the user selects a "capture" button, the synthesized image may be generated like the preview screen and stored in the memory of the electronic device.

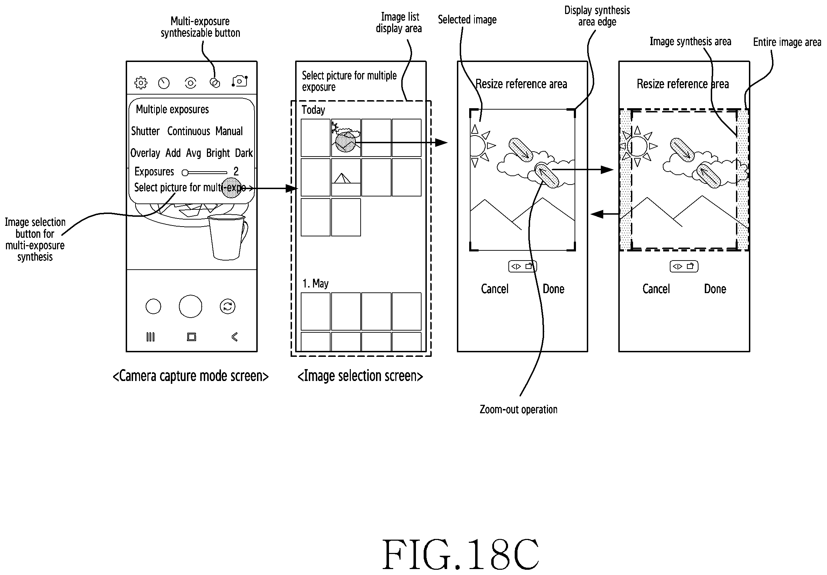

FIG. 18C illustrates a UX/UI of a multi-exposure synthesis mode screen displayed on a display of an electronic device according to an embodiment.

Referring to FIG. 18C, the case in which the aspect ratio of an image selected by a user is different from the ratio of the synthesis area. Since the selected image and the synthesis area have different aspect ratios, some areas of the selected image may not be located within the synthesis area. That is, even if the user reduces the selected image through a zoom-out operation, the electronic device may display the selected image so that the selected image fills the synthesis area. Therefore, some areas of the selected image may be located outside the synthesis area. When the user adjusts the size or position of the selected image, the size or position of the selected image may be adjusted in a manner that does not cause an empty area to occur within the synthesis area.

When the user performs a zoom-out operation, the electronic device may divide and display the entire area of the selected image and the synthesis area. For example, the electronic device may display an area located outside the synthesis area in the selected image to be darker than an area located inside the synthesis area. That is, the electronic device may divide and display the entire image area that displays the entire area of the selected image and the image synthesis area that displays an area in which synthesis is performed in the selected image. Therefore, the user may clearly recognize which area in the selected image will be subject to synthesis.

In an embodiment, when the user changes the size or position of the selected image, the user may change the size or position of the selected image regardless of the occurrence of an empty area in the synthesis area.

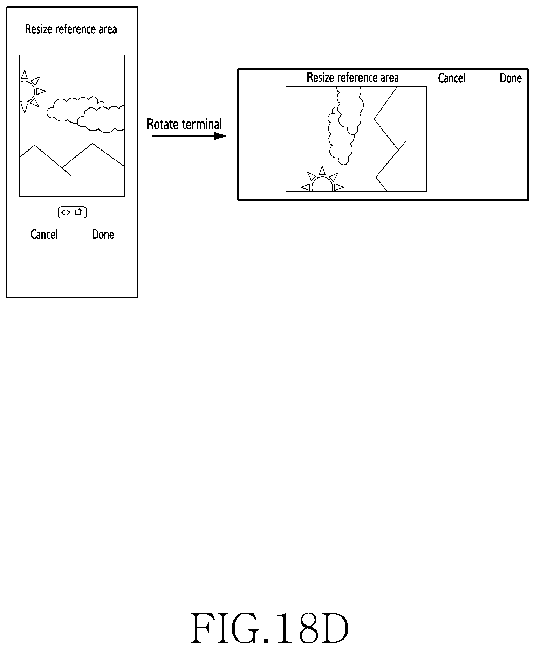

FIG. 18D illustrates a multi-exposure synthesis mode screen displayed on a display of an electronic device according to an embodiment.

Referring to FIG. 18D, an image displayed when the electronic device is rotated on an interface screen for modifying the selected image is illustrated. When an electronic device (e.g., a terminal) rotates in a vertical mode (left side of FIG. 18D) and becomes in a horizontal mode (right side of FIG. 18D), an interface displayed on the display of the electronic device may be appropriately transformed to a form suitable for a landscape screen by reflecting the rotation of the electronic device. However, in the case of the image selected for multi-exposure synthesis, the electronic device may display the selected image as it is, regardless of the rotation. Therefore, the electronic device may display the selected image on the display as it is in the initial state regardless of a change in the landscape or portrait mode.

The UX/UI screen described in FIG. 18A to FIG. 18D may be a UX/UI screen corresponding to the content described in operation 620 to operation 623-1 of FIG. 6.

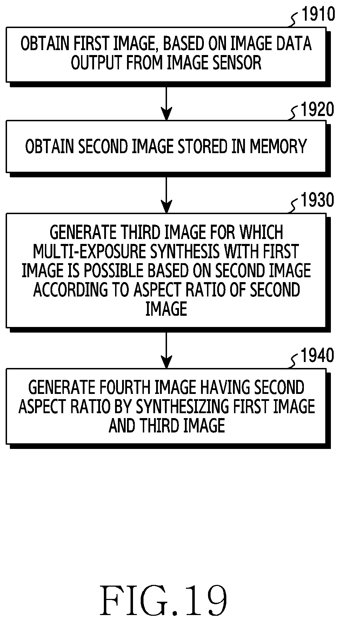

FIG. 19 is a flowchart illustrating a method of obtaining a multi-exposure image according to an embodiment. The operations illustrated in FIG. 19 may be performed by the electronic device described in FIG. 1 and FIG. 3. In addition, a processor included in the electronic device may be configured to perform the operations described in FIG. 19.

Referring to FIG. 19, in an embodiment, the method of obtaining the multi-exposure image may include an operation 1910 of obtaining a first image, an operation 1920 of obtaining a second image stored in the memory, an operation 1930 of generating a third image, and an operation 1940 of generating a fourth image.

The operation 1910 of obtaining the first image may include obtaining the first image, based on image data output from an image sensor. Operation 1910 may refer to obtaining an image through capture by the electronic device. The obtained image may be a base image (raw image) included in a raw image file (Raw file) (e.g., the image file of FIG. 5) or a processed image.

Operation 1920 may indicate obtaining an image pre-stored in the memory by the electronic device. The image pre-stored in the memory may be a base image (raw image) included in a raw image file (Raw file) (e.g., the image file of FIG. 5) or a processed image. In addition, the image pre-stored in the memory may be a processed image (processed image), which is obtained in various environments (e.g., an external server or other electronic device) and then stored in the memory.

In operation 1930, a third image for which multi-exposure synthesis is possible with the first image may be generated based on the second image, according to the aspect ratio of the second image. For example, in operation 1930, the third image may be generated by modifying the second image by adjusting the size of the second image in comparison to the aspect ratio of the second image and the aspect ratio of the synthesized image or by removing some areas of the second image. The generated third image may be the second image that has been modified so that multi-exposure synthesis is possible. In connection with the operation of modifying the second image, it will be described with reference to FIG. 11 to FIG. 13.

In operation 1940, a fourth image having a second aspect ratio may be generated by synthesizing the first image obtained in operation 1910 and the third image generated in operation 1930. The fourth image may indicate a synthesized image obtained by synthesizing the first image and the third image. In operation 1940, the first image and the third image may be synthesized based on the type of the area. For example, different synthesis methods may be applied for each type of the area. The synthesis method based on the type of the area is described with reference to FIG. 14 to FIG. 17.

Embodiments according to the disclosure describe an electronic device capable of generating a multi-exposure synthesized image through selection of a captured or pre-stored image by a user, and operations performed by the electronic device. Embodiments according to the disclosure utilize pre-stored images (for example, a base image and a processed image of the raw file) for multi-exposure capture by using the current capture environment and image file (for example, raw file) information generated as the result of multi-exposure.

The embodiments included in the disclosure are not mutually exclusive, and some components between the embodiments may be combined and implemented.

In an embodiment, an electronic device (e.g., the electronic device of FIG. 1 and FIG. 3) may include a camera module including an image sensor, a memory configured to store images, and at least one processor connected to the camera module and the memory. At least one processor may perform an operation of obtaining a first image, based on image data output from the image sensor. At least one processor may perform an operation of obtaining a second image stored in the memory. At least one processor may perform an operation of analyzing the second image. At least one processor may perform an operation of generating a third image for which multi-exposure synthesize with the first image is possible based on the second image, according to an aspect ratio of the second image. At least one processor may perform an operation of generating a fourth image having the second aspect ratio by synthesizing the first image and the third image.

In an embodiment, the electronic device may further include a display. The operation of obtaining the second image stored in the memory by at least one processor may include an operation of controlling the display to display an image file list including image files stored in the memory. The operation of obtaining the second image may include an operation of receiving a user input for selecting an image file from among the image file list and an operation of obtaining the second image from the image file, based on the user input, and the second image may include a base image or a processed image

In an embodiment, the operation of generating the third image, based on the second image may include an operation of generating the base image or the processed image, based on the second image. The operation of generating the third image may include one or more of an operation of rotating the second image, the generated base image or the generated processed image, an operation of adjusting a size, an operation of removing a part of the image, and an operation of changing a position.

In an embodiment, the processor may further perform an operation of obtaining modification information for the second image. The operation of obtaining the modification information for the second image may include an operation of controlling the display to display the second image and an interface for modifying the second image and an operation of obtaining the image modification information by receiving a user input for modifying the second image. The operation of generating the third image may include generating the third image, based on image modification information.

In an embodiment, the electronic device may further include a display. The operation of obtaining the second image stored in the memory may include an operation of controlling the display to display an image list including images stored in the memory, an operation of receiving a user input for selecting an image from among the image list, and an operation of obtaining the second image, based on the user input, and the second image may include a processed image.

In an embodiment, the third image (for example, input image) may include a first area including pixels having a value based on a pixel value of the second image. A pixel of the fourth image (e.g., synthesized image) corresponding to the pixel belonging to the first area of the third image may have a pixel value based on a pixel value of the first image and a pixel value of the third image.

In an embodiment, the third image (e.g., input image) includes a second area corresponding to remaining areas except for the first area. The pixel of the fourth image (for example, synthesized image) corresponding to the pixel belonging to the second area of the third image may have a pixel value based on the pixel value of the first image. Alternatively, the pixel of the fourth image (for example, synthesized image) corresponding to the pixel belonging to the second area of the third image may be determined based on the pixel value of the first image and a pixel value indicating an arbitrary color (white or black).

In an embodiment, the operation of generating the fourth image by synthesizing the first image and the third image may include an operation of generating a first corrected image obtained by applying white balancing to the first image and a second corrected image obtained by applying white balancing to the third image. The operation of generating the fourth image may include an operation of generating a third corrected image by synthesizing the first corrected image and the second corrected image. The operation of generating the fourth image includes an operation of generating the fourth image by applying inverse white balancing to the third corrected image.

In an embodiment, the electronic device may further include a display, and at least one processor may be configured to further perform an operation of controlling the display to display the fourth image in a form of a preview image.

In an embodiment, the operation of generating the fourth image may include determining a pixel value of the fourth image with reference to at least one of the first image or the third image, based on an area type corresponding to a pixel of the third image.

An operation method of obtaining a multi-exposure image according to an embodiment of the disclosure may correspond to operations performed by at least one processor of the electronic device described above.

According to various embodiments, an electronic device and a method of operating the same capable of improving the quality of the multi-exposure image may be provided.

According to various embodiments, an electronic device and a method of operating the same for making a displayed result through rendering of a multi-exposure image stored in a raw format have a color that is the same as or similar to that of a thumbnail image, a cover image, or a preview image of the multi-exposure image may be provided.

According to various embodiments, an electronic device and a method of operating the same for providing a preview image predicted to be generated when a capture command is input may be provided.

Advantageous effects obtainable from the disclosure may not be limited to the above-mentioned effects, and other effects which are not mentioned herein may be clearly understood from the following description by those skilled in the art to which the disclosure pertains.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

In the disclosure, the term "unit" or "module" may refer to a hardware component such as a processor or circuit, and/or a software component executed by a hardware component such as a processor.

The "unit" or "module" may be stored in an addressable storage medium and may be implemented by a program executable by a processor. For example, the "unit" or "module" may be implemented by elements such as software elements, object-oriented software elements, class elements, and task elements, processes, functions, attributes, procedures, sub-routines, segments of program codes, drivers, firmware, micro-codes, circuits, data, databases, data structures, tables, arrays, and parameters.

Particular implementations described herein are merely an embodiment, and do not limit the scope of the disclosure in any way. For the brevity and conciseness of the specification, a description of conventional electronic components, control systems, software, and other functional aspects of these systems may be omitted.

Also, as used herein, the expression "including at least one of a, b, or c" may mean "including only a", "including only b", "including only c", "including a and b", "including b and c", "including a and c", or "including a, b, and c all".

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An electronic device comprising:
a camera module comprising an image sensor;
a memory configured to store images; and
at least one processor connected to the camera module and the memory,
wherein the memory comprises instructions that, when executed by the at least one processor, cause the electronic device to:
obtain a first image, based on image data output from the image sensor;
obtain a second image stored in the memory;
based on an aspect ratio of the second image, generate a third image capable of multi-exposure synthesis with the first image, based on the second image; and
synthesize the first image and the third image to generate a fourth image having a second aspect ratio.

2. The electronic device of claim 1, wherein the electronic device further comprises a display,
wherein the memory further comprises instructions that, when executed by the at least one processor, cause the electronic device:
control the display to display an image file list comprising image files stored in the memory;
receive a user input for selecting an image file from the image file list; and
based on the user input, obtain the second image from the image file, and
wherein the second image comprises a base image (raw image) or a processed image.

3. The electronic device of claim 2, wherein the memory comprises instructions that, when executed by the at least one processor, cause the electronic device:
in order to generate the third image, generate the base image or the processed image, based on the second image;
perform one or more of operations of rotating the second image, the generated base image, or the generated processed image, adjusting a size thereof, removing a part thereof, or changing a position thereof;
in order to obtain modification information for the second image, control the display to display the second image and an interface for modifying the second image; and
receive a user input for modifying the second image to obtain the modification information, and
wherein the third image is generated based on the modification information.

4. The electronic device of claim 1, wherein the electronic device further comprises a display,
wherein the memory further comprises instructions that, when executed by the at least one processor, cause the electronic device to:
in order to obtain the second image, control the display to display an image list comprising the images stored in the memory;
receive a user input for selecting an image from the image list;
obtain the second image, based on the user input;
in order to generate the third image, generate a base image, based on the second image; and
perform one or more of operations of rotating the second image or the generated base image, adjusting a size thereof, removing a part thereof, or changing a position thereof, and
wherein the second image comprises a processed image

5. The electronic device of claim 1, wherein the third image comprises a first area including pixels having a value based on a pixel value of the second image and a second area corresponding to a remaining area other than the first area,
wherein a pixel of the fourth image, corresponding to the pixel belonging to the first area of the third image, has a pixel value based on a pixel value of the first image and a pixel value of the third image, and
wherein a pixel of the fourth image, corresponding to the pixel belonging to the second area of the third image, has a pixel value based on the pixel value of the first image.

6. The electronic device of claim 1, wherein the memory comprises instructions that, when executed by the at least one processor, cause the electronic device to:
in order to synthesize the thrid image with the first image to generate the fourth image, generate a first corrected image obtained by applying white balancing to the first image and a second corrected image obtained by applying white balancing to the third image;
synthesize the first corrected image and the second corrected image to generate a third corrected image; and
apply inverse white balancing to the third corrected image to generate the fourth image.

7. The electronic device of claim 1, wherein the memory further comprises instructions that, when executed by the at least one processor, cause the electronic device to, in order to generate the fourth image, determine a pixel value of the fourth image with reference to at least one of the first image or the third image, based on an area type corresponding to a pixel of the third image,.

8. A method of operating an electronic device comprising a camera module including an image sensor, the method comprising:
obtaining a first image, based on image data output from the image sensor;
obtaining a second image stored in a memory included in the electronic device;
based on an aspect ratio of the second image, generating a third image capable of multi-exposure synthesis with the first image, based on the second image; and
synthesizing the first image and the third image to generate a fourth image.

9. The method of claim 8, wherein the obtaining of the second image comprises:
controlling a display to display an image file list comprising image files stored in the memory;
receiving a user input for selecting an image file from the image file list; and
based on the user input, obtaining the second image from the image file, and
wherein the second image comprises a base image (raw image) or a processed image.

10. The method of claim 9, wherein the generating of the third image comprises:
generating the base image or the processed image, based on the second image; and
performing one or more of operations of rotating the second image, the generated base image or the generated processed image, adjusting a size thereof, removing a part thereof, or changing a position thereof,
wherein the generating of the third image further comprising obtaining modification information for the second image,
wherein the obtaining of the modification information for the second image comprises:
controlling the display to display the second image and an interface for modifying the second image; and
receiving a user input for modifying the second image to obtain the modification information, and
wherein the third image is generated based on the modification information.

11. The method of claim 8, wherein the obtaining of the second image comprises:
controlling the display to display an image list comprising images stored in the memory;
receiving a user input for selecting an image from the image list; and
based on the user input, obtaining the second image,
wherein the second image comprises a processed image, and
wherein the generating of the third image comprises:
generating a base image, based on the second image, and
performing one or more of operations of rotating the second image or the generated base image, adjusting a size thereof, removing a part thereof, or changing a position thereof.

12. The method of claim 8, wherein the third image comprises a first area including pixels having a value based on a pixel value of the second image, and
wherein a pixel of the fourth image, corresponding to the pixel belonging to the first area of the third image, has a pixel value based on a pixel value of the first image and a pixel value of the third image.

13. The method of claim 12, wherein the third image comprises a second area corresponding to a remaining area other than the first area, and
wherein the pixel of the fourth image, corresponding to a pixel belonging to the second area of the third image, has a pixel value based on the pixel value of the first image.

14. The method of claim 8, wherein the synthesizing of the first image and the third image to generate the fourth image comprises:
generating a first corrected image obtained by applying white balancing to the first image and a second corrected image obtained by applying white balancing to the third image;
synthesizing the first corrected image and the second corrected image to generate a third corrected image; and
applying inverse white balancing to the third corrected image to generate the fourth image.

15. The method of claim 8, wherein the generating of the fourth image comprises determining a pixel value of the fourth image with reference to at least one of the first image or the third image, based on an area type corresponding to a pixel of the third image.
